# EUROPEAN PATENT APPLICATION

(11) **EP 4 383 800 A1**
(43) Date of publication of application: **12.06.2024**
(21) Application number: 22852173.8
(22) Date of filing: 02.08.2022
(51) Int. Cl.: H04W 24/10

(54) **METHOD AND APPARATUS FOR TRANSMITTING BUFFER DATA STATE INFORMATION OF SECONDARY CELL GROUP**

(30) Priority: 06.08.2021 CN 202110904391
(71) Applicant: Datang Mobile Communications Equipment Co., Ltd., Beijing 100085 (CN)
(72) Inventor: YAN, Xue, Beijing 100085 (CN); XU, Meng, Beijing 100085 (CN)
(74) Representative: Studio Torta S.p.A.
(86) International application number: PCT/CN2022/109679
(87) International publication number: WO 2023/011461

(57) **Abstract**

Embodiments of the present disclosure provide a method and apparatus for transmitting buffer data state information of a secondary cell group. The method comprises: determining that a secondary cell group (SCG) is in a deactivated state; sending target information to a network device by means of a master cell group (MCG); the target information being used to indicate buffer data state information of the SCG. The target information comprises one or more of the following: a target buffer state report (BSR) and target radio resource control (RRC) signaling. The method and apparatus for transmitting buffer data state information a secondary cell group provided in embodiments of the present disclosure can implement the function of a terminal indicating SCG-side buffer data state information.

## Description

### CROSS-REFERENCE TO RELATED APPLICATION

The present application claims priority to Chinese patent application No. 202110904391.X filed on August 06, 2021, entitled "Method and Apparatus for Transmitting Buffer Data State Information of Secondary Cell Group", which is hereby incorporated by reference in its entirety.

### FIELD

The present application relates to the field of communication, and in particular to methods and apparatuses for transmitting buffer data status information of a secondary cell group.

### BACKGROUND

A secondary cell group (SCG) deactivated state has been introduced in new radio (NR) R17. The SCG deactivated state is also equivalent to an SCG dormant state, or an SCG suspend state, or a primary SCG cell (that is, a primary cell in the secondary cell group, which can be abbreviated as PSCell) suspend state, or a PSCell dormant state, or a PSCell deactivated state, etc.

Currently, when the SCG is in the deactivated state, in scenarios such as when uplink data from a terminal reaches a radio link control (RLC) bearer on a SCG side, the terminal needs to trigger SCG activation. How to trigger SCG activation by the terminal is a problem to be solved.

### SUMMARY

Embodiments of the present application provide methods and apparatuses for transmitting buffer data status information of a secondary cell group (SCG), to solve the above problem in the related art.

An embodiment of the present application provides a method for transmitting buffer data status information of a secondary cell group (SCG), including:
determining that the SCG is in a deactivated state;
transmitting target information to a network device by a master cell group (MCG), where the target information is used for indicating the buffer data status information of the SCG;
the target information includes one or more of the following:
   a target buffer status report (BSR); or
   target radio resource control (RRC) signaling.

In an embodiment, in case that the target information includes the target BSR, a logical channel ID (LCID) corresponding to the target BSR includes:
a target LCID value corresponding to a reserved codepoint and/or index parameter value, where the target LCID value corresponds to a format for a BSR of the SCG,
where the format for the BSR of the SCG includes one or more of a short BSR, a long BSR, a short truncated BSR or a long truncated BSR.

In an embodiment, in case that the target information includes the target BSR, a logical channel ID (LCID) corresponding to the target BSR includes:
a target LCID value corresponding to a reserved codepoint and/or index parameter value, where the target LCID value corresponds to a BSR for a predetermined format of the SCG,
where a BSR medium access control (MAC) control element (CE) corresponding to the BSR for the predetermined format of the SCG includes one or more of the following:
   an SCG index;
   a logical channel group (LCG) bitmap;
   an LCG ID;
   the LCID;
   an LCID bitmap;
   an LCID index bitmap;
   an LCID index;
   LCID bitmap length indication information;
   LCID index length indication information;
   buffer data information; or
   whether indication information of an unreported BSR is present.

In an embodiment, in case that the target information includes the target BSR, a reserved bit of a medium access control (MAC) subheader corresponding to the target BSR includes any one of the following:
in case that the MAC subheader includes one reserved bit, the reserved bit representing whether the target BSR is the BSR of the SCG;
in case that the MAC subheader includes two reserved bits, any one of the two reserved bits representing whether the target BSR is the BSR of the SCG;
in case that the MAC subheader includes two reserved bits, one of the two reserved bits representing whether the target BSR is the BSR of the SCG and the other of the two reserved bits representing whether the target BSR is the BSR of the MCG; or
in case that the MAC subheader includes two reserved bits, the two reserved bits representing the SCG index, where the SCG index is used for indicating the target BSR is the BSR of which SCG,
where a format for the target BSR includes any one of a short BSR, a long BSR, a short truncated BSR, a long truncated BSR or a predetermined BSR.

In an embodiment, in case of one of the two reserved bits representing whether the target BSR is the BSR of the SCG and the other of the two reserved bits representing whether the target BSR is the BSR of the MCG, the MAC subheader corresponding to the target BSR includes any one of the following:
one target LCID for indicating a format for the BSR of the SCG and/or a format for the BSR of the MCG; or
two target LCIDs for indicating the format for the BSR of the SCG and the format for the BSR of the MCG respectively.

In an embodiment, in case that the target information includes the target RRC signaling, the target RRC signaling includes data radio bearer (DRB) ID information, where the DRB ID information is ID information of a DRB having to-be-transmitted data in the SCG, and is indicated by a bitmap,
where the bitmap includes any one of the following:
IDs of all MCGs and IDs of all SCGs;
a DRB ID of a radio link control (RLC) bearer in an SCG;
a DRB ID of an RLC bearer in an SCG, where the RLC bearer does not belong to a split bearer; or
a DRB ID of an RLC bearer in an SCG, where the RLC bearer only includes a split bearer of which a primary path is in the SCG in case that the RLC bearer is a split bearer.

In an embodiment, in case that the target information includes the target RRC signaling, the target RRC signaling includes data radio bearer (DRB) ID, where the DRB ID is an ID of a DRB having to-be-transmitted data in the SCG, and is any one of the following:
a DRB ID of a radio link control (RLC) bearer in an SCG;
a DRB ID of an RLC bearer in an SCG, where the RLC bearer does not belong to a split bearer; or
a DRB ID of an RLC bearer in an SCG, where the RLC bearer only includes a split bearer of which a primary path is in the SCG in case that the RLC bearer is a split bearer.

In an embodiment, in case that the target information includes the target RRC signaling, the target RRC signaling includes logical channel ID (LCID) information, where the LCID information is ID information of a logical channel having to-be-transmitted data in the SCG, and is indicated by a bitmap or by an LCID list; and
the LCID information satisfies any one of the following:
the LCID information includes a bearer, where the bearer only includes a split bearer of which a primary path is in the SCG in case that the bearer is the split bearer;
the LCID information includes a bearer, where the bearer does not belong to a split bearer; or
the LCID information includes a bearer, where the bearer does not belong to a split bearer of which a primary path is in the MCG.

In an embodiment, in case that the target information includes the target RRC signaling, the target RRC signaling includes logical channel group ID (LCG ID) information, where the LCG ID information is ID information of a LCG having to-be-transmitted data in the SCG, and is indicated by a bitmap or by an LCG ID list.

In an embodiment, in case that the target information includes the target RRC signaling, the target RRC signaling includes indication information of an SCG having to-be-transmitted data.

In an embodiment, in case that the target information includes the target RRC signaling, the target RRC signaling includes information of a size of to-be-transmitted data in the SCG,
where the size of the to-be-transmitted data in the SCG is in units of any one of per DRB, per LC, per LCG or per SCG.

An embodiment of the present application further provides a method for transmitting buffer data status information of a secondary cell group (SCG), including:
receiving target information transmitted from a terminal through a master cell group (MCG) in case that an SCG is in a deactivated state, where the target information is used for indicating the buffer data status information of the SCG;
the target information includes one or more of the following:
   a target buffer status report (BSR); or
   target radio resource control (RRC) signaling.

In an embodiment, in case that the target information includes the target BSR, a logical channel ID (LCID) corresponding to the target BSR includes:
a target LCID value corresponding to a reserved codepoint and/or index parameter value, where the target LCID value corresponds to a format for a BSR of the SCG,
where one target LCID value corresponds to one format for a BSR of the SCG, and the format for the BSR of the SCG includes any one of a short BSR, a long BSR, a short truncated BSR or a long truncated BSR.

In an embodiment, in case that the target information includes the target BSR, a logical channel ID (LCID) corresponding to the target BSR includes:
a target LCID value corresponding to a reserved codepoint and/or index parameter value, where the target LCID value corresponds to a BSR for a predetermined format of the SCG,
where a BSR medium access control (MAC) control element (CE) corresponding to the BSR for the predetermined format of the SCG includes one or more of the following:
   an SCG index;
   a logical channel group (LCG) bitmap;
   an LCG ID;
   the LCID;
   an LCID bitmap;
   an LCID index bitmap;
   an LCID index;
   LCID bitmap length indication information;
   LCID index length indication information;
   buffer data information; or
   whether indication information of an unreported BSR is present.

In an embodiment, in case that the target information includes the target BSR, a reserved bit of a medium access control (MAC) subheader corresponding to the target BSR includes any one of the following:
in case that the MAC subheader includes one reserved bit, the reserved bit representing whether the target BSR is the BSR of the SCG;
in case that the MAC subheader includes two reserved bits, any one of the two reserved bits representing whether the target BSR is the BSR of the SCG;
in case that the MAC subheader includes two reserved bits, one of the two reserved bits representing whether the target BSR is the BSR of the SCG and the other of the two reserved bits representing whether the target BSR is the BSR of the MCG; or
in case that the MAC subheader includes two reserved bits, the two reserved bits representing the SCG index, where the SCG index is used for indicating the target BSR is the BSR of which SCG,
where a format for the target BSR includes any one of a short BSR, a long BSR, a short truncated BSR, a long truncated BSR or a predetermined BSR.

In an embodiment, in case of one of the two reserved bits representing whether the target BSR is the BSR of the SCG and the other of the two reserved bits representing whether the target BSR is the BSR of the MCG, the MAC subheader corresponding to the target BSR includes any one of the following:
one target LCID for indicating a format for the BSR of the SCG and/or a format for the BSR of the MCG; or
two target LCIDs for indicating the format for the BSR of the SCG and the format for the BSR of the MCG respectively.

In an embodiment, in case that the target information includes the target RRC signaling, the target RRC signaling includes data radio bearer (DRB) ID information, where the DRB ID information is ID information of a DRB having to-be-transmitted data in the SCG, and is indicated by a bitmap,
where the bitmap includes any one of the following:
IDs of all MCGs and IDs of all SCGs;
a DRB ID of a radio link control (RLC) bearer in an SCG;
a DRB ID of an RLC bearer in an SCG, where the RLC bearer does not belong to a split bearer; or
a DRB ID of an RLC bearer in an SCG, where the RLC bearer only includes a split bearer of which a primary path is in the SCG in case that the RLC bearer is a split bearer.

In an embodiment, in case that the target information includes the target RRC signaling, the target RRC signaling includes data radio bearer (DRB) ID, where the DRB ID is an ID of a DRB having to-be-transmitted data in the SCG, and is any one of the following:
a DRB ID of a radio link control (RLC) bearer in an SCG;
a DRB ID of an RLC bearer in an SCG, where the RLC bearer does not belong to a split bearer; or
a DRB ID of an RLC bearer in an SCG, where the RLC bearer only includes a split bearer of which a primary path is in the SCG in case that the RLC bearer is a split bearer.

In an embodiment, in case that the target information includes the target RRC signaling, the target RRC signaling includes logical channel ID (LCID) information, where the LCID information is ID information of a logical channel having to-be-transmitted data in the SCG, and is indicated by a bitmap or by an LCID list; and
the LCID information satisfies any one of the following:
the LCID information includes a bearer, where the bearer only includes a split bearer of which a primary path is in the SCG in case that the bearer is the split bearer;
the LCID information includes a bearer, where the bearer does not belong to a split bearer; or
the LCID information includes a bearer, where the bearer does not belong to a split bearer of which a primary path is in the MCG.

In an embodiment, in case that the target information includes the target RRC signaling, the target RRC signaling includes logical channel group ID (LCG ID) information, where the LCG ID information is ID information of a LCG having to-be-transmitted data in the SCG, and is indicated by a bitmap or by an LCG ID list.

In an embodiment, in case that the target information includes the target RRC signaling, the target RRC signaling includes indication information of an SCG having to-be-transmitted data.

In an embodiment, in case that the target information includes the target RRC signaling, the target RRC signaling includes information of a size of to-be-transmitted data in the SCG,
where the size of the to-be-transmitted data in the SCG is in units of any one of per DRB, per LC, per LCG or per SCG.

In an embodiment, the method for transmitting the buffer data status information of the SCG further includes:
performing, based on the target information, one or more of the following:
reconfiguring the target bearer for the MCG and/or the SCG;
activating the SCG,
where the target bearer is used for transmitting data corresponding to the buffer data status information of the SCG.

An embodiment of the present application further provides a terminal, including:
a processor; a memory for storing a computer program; and a transceiver for transmitting and receiving data under a control of the processor, where the computer program, when executed by the processor, causes the terminal to perform steps of the method for transmitting the buffer data status information of the SCG mentioned above.

An embodiment of the present application further provides a network device, including:
a processor; a memory for storing a computer program; and a transceiver for transmitting and receiving data under a control of the processor, where the computer program, when executed by the processor, causes the terminal to perform steps of the method for transmitting the buffer data status information of the SCG mentioned above.

An embodiment of the present application further provides a non-transitory processor-readable storage medium storing a computer program that causes a processor to perform steps of the method for transmitting the buffer data status information of the SCG mentioned above.

In the methods and apparatuses for transmitting the buffer data status information of the secondary cell group provided by the present application, the network device receives the target information including the buffer data status information of the SCG transmitted from the terminal through the MCG side in case that the SCG is in the deactivated state, and the terminal indicates the buffer data status information on the SCG side. In case that the SCG is in the deactivated state, the network device makes a decisions and performs a corresponding operation based on the buffer data status information on the SCG side reported by the terminal, and uplink data on the SCG side is reported smoothly, which significantly improves the stability and efficiency of communication compared with the related art.

### BRIEF DESCRIPTION OF THE DRAWINGS

In order to clearly illustrate the solutions disclosed in the embodiments of the present application or the related art, the drawings used in the descriptions of the embodiments or the related art are briefly described below. The drawings in the following description are only certain embodiments of the present application, and other drawings may be obtained according to these drawings without creative work for those skilled in the art.
FIG. 1 is a schematic diagram of medium access control (MAC) control elements (CEs) of a long buffer status report (BSR) and a long truncated BSR;
FIG. 2 is a first schematic diagram of header fields of an MAC subheader;
FIG. 3 is a second schematic diagram of header fields of an MAC subheader;
FIG. 4 is a first schematic flowchart of a method for transmitting buffer data status information of a secondary cell group (SCG) according to an embodiment of the present application;
FIG. 5 is a second schematic flowchart of a method for transmitting buffer data status information of a secondary cell group (SCG) according to an embodiment of the present application;
FIG. 6 is a schematic structural diagram of a network device according to an embodiment of the present application;
FIG. 7 is a schematic structural diagram of a terminal according to an embodiment of the present application;
FIG. 8 is a first schematic structural diagram of an apparatus for transmitting buffer data status information of a secondary cell group (SCG) according to an embodiment of the present application; and
FIG. 9 is a second schematic structural diagram of an apparatus for transmitting buffer data status information of a secondary cell group (SCG) according to an embodiment of the present application.

### DETAILED DESCRIPTION

In the embodiments of the present application, the term "and/or" describes a related relationship of associated objects, and indicates that there can be three kinds of relationships. For example, A and/or B can represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar.

The solutions in the embodiments of the present application are clearly and completely described in the following with reference to the accompanying drawings in the embodiments of the present application. These embodiments are only a part of the embodiments of the present application, and not all of the embodiments. All other embodiments obtained by a person of ordinary skill in the art based on the embodiments of the present application without any creative work belong to the scope of the present application.

In order to fully understand solutions of the present application, the following content is introduced.

In a multi-connectivity scenario, it is divided into one master cell group (MCG) and one to multiple secondary cell groups (SCGs). A cell group on a master node (MN) side is the MCG, which consists of one primary cell (PCell) and zero to multiple secondary cells (SCells). A cell group on a secondary node (SN) side is the SCG, which consists of one Primary SCG Cell (PSCell) and zero to multiple SCells. The current protocol version only supports a dual-connectivity scenario. In a connected state, a terminal is configured with dual-connectivity, and the MN and the SN can interact with the terminal simultaneously.

Considering power saving and quick activation of SCG for data transmission, the terminal can set the SCG side to a deactivated SCG state when a volume of transmitted data is small. In the deactivated SCG state, the terminal does not monitor physical downlink control channel (PDCCH) at the SCG side, and does not transmit physical uplink shared channel (PUSCH).

### (1) Activation/deactivation of SCG

The MN/SN/terminal can request to activate the SCG, and a network-triggered SCG activation command is transmitted by the MN to the terminal. The MN/SN can request to deactivate the SCG, and a network-triggered SCG deactivation command is transmitted by the MN to the terminal. During the SCG activation/deactivation process, radio resource control (RRC) signaling is used for interaction between the terminal/MN and the MN/SN.

### (2) Buffer status report (BSR)

A BSR process is used to provide a serving gNB (a 5G base station) with the amount of uplink data in a medium access control (MAC) entity.

Each logical channel can be assigned to a logical channel group (LCG), and the maximum number of LCGs is 8. The MAC entity determines the uplink data volume of a logical channel based on the calculation process of the data volume.

BSR reporting formats include a long BSR, a short BSR, a short truncated BSR and a long truncated BSR. Different reporting formats are selected based on the number of LCGs with transmittable data, the number of padding bits, etc. Different BSR formats are distinguished by different logical channel IDs (LCIDs) in a MAC subprotocol data unit (subPDU) header.

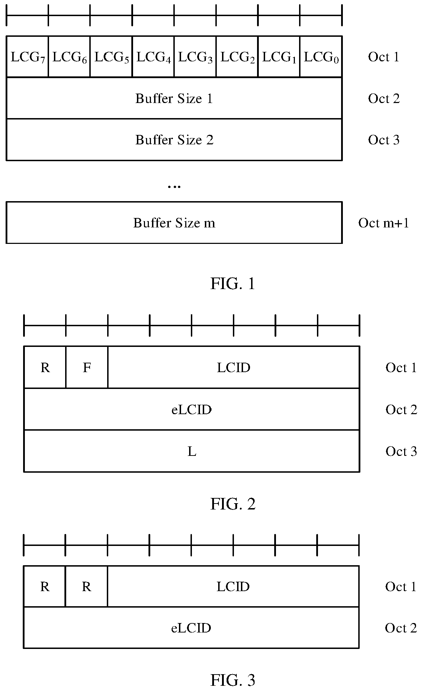

During the BSR reporting, the LCG is used as a granularity and a size of to-be-transmitted data by the LCG is reported to a network side. MAC control elements (CEs) of the long BSR and the long truncated BSR is taken as an example: As shown in FIG 1, each LCGᵢ indicates whether buffer size of the to-be-transmitted data in the i-th LCG is reported. The LCGᵢ being 1 indicates that the buffer size field for this LCG is reported, LCGᵢ being 0 indicates that the buffer size field for this LCG is not reported, where i ranges from 0 to 7, that is, there are 8 LCGs in total.

### (3) MAC PDU

A MAC PDU is consisted of one or more MAC subPDUs. Each MAC subPDU is consisted of one of the following:
a MAC subheader (including padding);
a MAC subheader and a MAC service data unit (SDU);
a MAC subheader and a MAC CE; and
a MAC subheader and padding.

The MAC SDUs are of variable sizes, and each MAC subheader corresponds to a MAC SDU, a MAC CE, or padding.

A MAC subheader, except for fixed sized MAC CE, padding, and a MAC SDU including uplink (UL) common control channel (CCCH), is consisted of header fields R/F/LCID/(eLCID)/L. FIG. 2 shows one of the formats where L is 8-bit.

A MAC subheader for fixed sized MAC CE, padding, and a MAC SDU including UL CCCH consists of two of the header fields R/LCID/(eLCID). FIG. 3 shows one of the formats.

Each of the fields are explained.
LCID: the logical channel instance of the MAC SDU or the type of the MAC CE or padding corresponding to the DL-shared channel (SCH) and UL-SCH respectively.
eLCID: an extended logical channel ID.
L: a length (in bytes) of a corresponding MAC SDU or a variable-sized CE.
F: a size of a length field.
R: a reserved bit, which is set to 0.

Values of LCIDs for UL-SCH are shown in Table 1.

**Table 1 Values of LCID for UL-SCH**

| Codepoint/Index | LCID values |
|---|---|
| 0 | CCCH of 64 bits size (referred to as "CCCH1" in TS 38.331 [5]) |
| 1-32 | Identity of the logical channel |
| 33 | Extended logical channel ID field (two octets eLCID field) |
| 34 | Extended logical channel ID field (one octet eLCID field) |
| 35-44 | Reserved |
| ... | ... |
| 59 | Short truncated BSR |
| 60 | Long truncated BSR |
| 61 | Short BSR |
| | Long BSR |
| 63 | Padding |

Embodiments of the present application provide methods and apparatuses for transmitting buffer data status information of a secondary cell group (SCG), to solve a problem that a terminal cannot indicate buffer data status information on a SCG side in the related art.

The methods and the apparatuses are based on the same concept, the implementation of the devices and the methods can be referred to each other since the principles of the methods and the apparatuses are similar, and the repetition will not be described again.

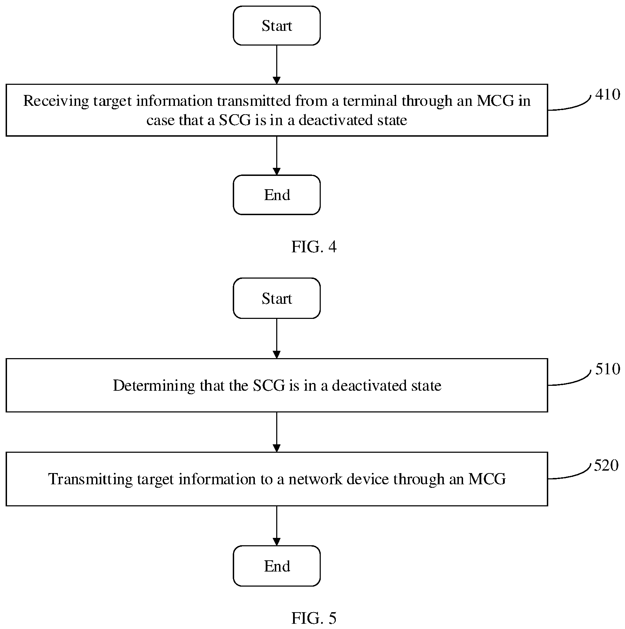

FIG. 4 is a first schematic flowchart of a method for transmitting buffer data status information of a secondary cell group (SCG) according to an embodiment of the present application. Referring to FIG. 4, the method for transmitting buffer data status information of the SCG includes the following step.

Step 410: receiving target information transmitted from a terminal through a master cell group (MCG) in case that the secondary cell group (SCG) is in a deactivated state, where the target information is used for indicating the buffer data status information of the SCG;
the target information includes one or more of the following:
a target buffer status report (BSR); or
target radio resource control (RRC) signaling.

The buffer data status information of the SCG is used for representing data arriving at the SCG side and the content related to the data.

It should be noted that the method for transmitting the buffer data status information of the SCG provided by the embodiment of the present application may be performed by a network device, such as a base station.

When the SCG is in a deactivated state, for example, in a scenario where uplink data from the terminal reaches a radio link control (RLC) bearer of the SCG, the terminal will transmit the target information to the network device through the MCG.

After receiving the target information transmitted from the terminal through the MCG, the network device will parse the target information to obtain the buffer data status information of the SCG included in the target information to determine that the SCG has uplink data to be reported at this time, and then perform corresponding operations to report the uplink data on the SCG side to the network device.

The target information may include the target BSR and the target RRC signaling. The target BSR may refer to the BSR transmitted from the terminal to the network device through the MCG, and the target RRC signaling may refer to the RRC signaling transmitted from the terminal to the network device through the MCG.

In the method for transmitting the buffer data status information of the SCG, the network device receives the target information including the buffer data status information of the SCG transmitted from the terminal through the MCG side in case that the SCG is in the deactivated state, and the terminal indicates the buffer data status information on the SCG side. In case that the SCG is in the deactivated state, the network device makes a decisions and performs a corresponding operation based on the buffer data status information on the SCG side reported by the terminal, and uplink data on the SCG side is reported smoothly, which significantly improves the stability and efficiency of communication compared with the related art.

In an embodiment, in case that the target information includes the target BSR, a logical channel ID (LCID) in the MAC subPDU header where a BSR medium access control (MAC) control element (CE) corresponding to the target BSR is located may include:
a target LCID value corresponding to a reserved codepoint and/or index parameter value, where the target LCID value corresponds to a format for a BSR of the SCG,
where the format for the BSR of the SCG includes one or more of a short BSR, a long BSR, a short truncated BSR or a long truncated BSR.

It should be noted that the reserved codepoint and/or index parameter value may be a codepoint and/or an index parameter value reserved in the LCID, or a codepoint and/or an index parameter value reserved in an extended LCID (eLCID), or can be a preset codepoint and/or index parameter value other than the above two reserved codepoint and/or index parameter values.

For example, the reserved codepoint and/or index parameter value may be codepoint and/or index parameter values of 35 to 44 reserved in the LCID, or codepoint parameter values of 0 to 249 and/or index parameter values of 64 to 313 reserved in the eLCID, or codepoint parameter values of 0 to (216-1) and/or index parameter values of 320 to (216+319) reserved in the eLCID.

It should be noted that the codepoint parameter value and the index parameter value may be the same or different. For example, the codepoint parameter and index parameter in the LCID are the same, and the codepoint parameter and index parameter in the eLCID are different.

The following gives some examples.

1a. Any four of the reserved codepoint and/or index parameters of 35 to 44 correspond to four target LCID values respectively. The four target LCID values correspond to the short BSR, the long BSR, the short truncated BSR and the long truncated BSR format of the SCG, respectively.

For example, index 35 can be used to represent a first target LCID value, which corresponds to the short truncated BSR format of the SCG, index 36 can be used to represent a second target LCID value, which corresponds to the long truncated BSR format of the SCG, index 37 can be used to represent a third target LCID value, which corresponds to the short BSR format of the SCG, and index 38 can be used to represent a fourth target LCID value, which corresponds to the long BSR format of the SCG.

When the LCID value corresponds to index 35, after receiving the target BSR, the network device can determine that the target BSR is the short truncated BSR format of the SCG. The network device reads the information in the target BSR, obtains which LCGs have to-be-transmitted data, to determine that which bearers of SCG have to-be-transmitted data.

1b. Any four of the reserved codepoint parameters of 0 to 249 and/or index parameters of 64 to 313 correspond to four target LCID values respectively. The four target LCID values correspond to the short BSR, the long BSR, the short truncated BSR and the long truncated BSR format of the SCG, respectively.

For example, index 65 can be used to represent the first target LCID value, which corresponds to the short truncated BSR format of the SCG, and index 66 can be used to represent the second target LCID value, which corresponds to the long truncated BSR format of the SCG, index 67 can be used to represent the third target LCID value, which corresponds to the short BSR format of the SCG, and index 68 can be used to represent the fourth target LCID value, which corresponds to the long BSR format of the SCG.

When the LCID value corresponds to index 65, after receiving the target BSR, the network device can determine that the target BSR is the short truncated BSR format of the SCG. The network device reads the information in the target BSR, obtains which LCGs have to-be-transmitted data, to determine that which bearers of SCG have to-be-transmitted data.

1c. Four preset codepoint and/or index parameter values correspond to four target LCID values, respectively. The four target LCID values correspond to the short BSR, the long BSR, the short truncated BSR and the long truncated BSR of SCG respectively.

For example, a first preset codepoint and/or index parameter value may be used to represent the first target LCID value, and the first target LCID value corresponds to the short truncated BSR format of the SCG. A second preset codepoint and/or index parameter value may represent the second target LCID value, and the second target LCID value corresponds to the long truncated BSR format of the SCG. A third preset codepoint and/or index parameter value may represent the third target LCID value, and the third target LCID value corresponds to the short BSR format of the SCG. A fourth preset codepoint and/or the index parameter value may represent the fourth target LCID value, and the fourth target LCID value corresponds to the long BSR format of the SCG.

When the LCID value corresponds to the first preset codepoint and/or index parameter value, after receiving the target BSR, the network device can determine that the target BSR is the short truncated BSR format of the SCG. The network device reads the information in the target BSR, obtains which LCGs have to-be-transmitted data, to determine that which bearers of SCG have to-be-transmitted data.

2a. Any two of the reserved codepoint and/or index parameters of 35 to 44 correspond to two target LCID values respectively, and these two target LCID values can correspond to any two BSR format of the SCG. For example: the two target LCID values may correspond to the short BSR and the long BSR format of the SCG respectively. Specifically, index 35 can be used to represent the first target LCID value, which corresponds to the short BSR format of the SCG, and index 36 represents the second target LCID value, which corresponds to the long BSR format of the SCG.

When the LCID value corresponds to index 35, after receiving the target BSR, the network device can determine that the target BSR is the short BSR format of the SCG. The network device reads the information in the target BSR, obtains which LCGs have to-be-transmitted data, to determine that which bearers of SCG have to-be-transmitted data.

2b. Any two of the reserved codepoint parameters of 0 to 249 and/or index parameters of 64 to 313 correspond to two target LCID values respectively, and these two target LCID values can correspond to any two BSR formats of the SCG. For example, the two target LCID values correspond to the short BSR and the long BSR format of the SCG respectively. Specifically, index 65 can be used to represent the first target LCID value, which corresponds to the short BSR format of the SCG, and index 66 represents the second target LCID value, which corresponds to the long BSR format of the SCG.

When the LCID value corresponds to index 65, after receiving the target BSR, the network device can determine that the target BSR is the short BSR format of the SCG. The network device reads the information in the target BSR, obtains which LCGs have to-be-transmitted data, to determine that which bearers of SCG have to-be-transmitted data.

2c. Two preset codepoint and/or index parameter values correspond to two target LCID values respectively, and these two target LCID values can correspond to any two BSR formats of the SCG. For example, the two target LCID values correspond to the short BSR and the long BSR format of the SCG respectively.

For example, the first preset codepoint and/or index parameter value may be used to represent the first target LCID value corresponding to the short BSR format of the SCG, and the second preset codepoint and/or index parameter value may represent the second target LCID value and the second target LCID value corresponds to the long BSR format of the SCG.

When the LCID value corresponds to the first preset codepoint and/or index parameter value, after receiving the target BSR, the network device can determine that the target BSR is the short BSR format of the SCG. The network device reads the information in the target BSR, obtains which LCGs have to-be-transmitted data, to determine that which bearers of SCG have to-be-transmitted data.

3a. Any one of the reserved codepoint and/or index parameters of 35 to 44 corresponds to one target LCID value, and this target LCID value can be any one of the four BSR formats of the SCG. For example, the short BSR format of the SCG is defined as 0, the long BSR format is defined 1, the short truncated BSR format is defined as 2 and the long truncated BSR format is defined 3, then: in case that any one corresponding to one target LCID value is marked as 3, it is indicated that the target LCID value corresponds to the long truncated BSR format of the SCG; and in case that any one corresponding to one target LCID value is marked as 0, it is indicated that the target LCID value corresponds to the short BSR format of the SCG; and so on.

For example, index 37 can be used to represent the target LCID value, and it is assumed that the target LCID value is 3. When the LCID value corresponds to index 37, after receiving the target BSR, the network device can determine that the target BSR is the long truncated BSR format of the SCG. The network device reads the information in the target BSR, obtains which LCGs have to-be-transmitted data, to determine that which bearers of SCG have to-be-transmitted data.

3b. Any one of the reserved codepoint parameters of 0 to 249 and/or index parameters of 64 to 313 corresponds to one target LCID value, and this target LCID value can be any one of the four BSR formats of the SCG. For example, the short BSR format of the SCG is defined as 0, the long BSR format is defined 1, the short truncated BSR format is defined as 2 and the long truncated BSR format is defined 3, then: in case that any one corresponding to one target LCID value is marked as 3, it is indicated that the target LCID value corresponds to the long truncated BSR format of the SCG; and in case that any one corresponding to one target LCID value is marked as 0, it is indicated that the target LCID value corresponds to the short BSR format of the SCG; and so on.

For example, index 37 or index 67 may be used to represent the target LCID value, and it is assumed that the target LCID value is 3. The target LCID value corresponds to the long truncated BSR format of the SCG.

When the LCID value corresponds to index 37 or index 67, after receiving the target BSR, the network device can determine that the target BSR is the long truncated BSR format of the SCG. The network device reads the information in the target BSR, obtains which LCGs have to-be-transmitted data, to determine that which bearers of SCG have to-be-transmitted data.

3c. One preset codepoint and/or index parameter value corresponds to one target LCID value, and this target LCID value can be any of the four BSR formats of the SCG. For example, the short BSR format of the SCG is defined as 0, the long BSR format is defined 1, the short truncated BSR format is defined as 2 and the long truncated BSR format is defined 3, then: in case that any one corresponding to one target LCID value is marked as 3, it is indicated that the target LCID value corresponds to the long truncated BSR format of the SCG; and in case that any one corresponding to one target LCID value is marked as 0, it is indicated that the target LCID value corresponds to the short BSR format of the SCG; and so on.

When the LCID value corresponds to the preset codepoint and/or index parameter value, after receiving the target BSR, the network device can determine the target BSR is what BSR format of the SCG based on the preset codepoint and/or index parameter value. The network device reads the information in the target BSR, obtains which LCGs have to-be-transmitted data, to determine that which bearers of SCG have to-be-transmitted data.

In an embodiment, in case that the target information includes the target BSR, the LCID corresponding to the target BSR may include the following.

The reserved codepoint and/or index parameter values correspond to the target LCID value, and the target LCID value corresponds to the BSR for the predetermined format of the SCG; the BSR MAC CE corresponding to the predetermined BSR format may include one or more of the following.
1. An SCG index, indicating that the target BSR is the BSR of which SCG.
2. An LCG bitmap, indicating that the SCG has to-be-transmitted data, where 1 bit represents one LCG.
3. An LCG ID, indicating that the SCG has to-be-transmitted data.
4. An LCID, indicating that the SCG has to-be-transmitted data.
5. An LCID bitmap, indicating that the SCG has to-be-transmitted data, where 1 bit represents one LC.
6. An LCID index bitmap, where the LCID index is used to identify the corresponding LCID. For example, in case that the SCG only has an LCID/drbID of 5/6/7/8/9/31 associated with a data radio bearer (DRB) or associated with a RLC bearer for uplink transmission, the LCID index bitmap is sorted and coded according to the preset order, such as the order of LCID size, that is, index=0 corresponds to LCID5, index=1 corresponds to LCID6, index=2 corresponds to LCID7, index=3 corresponds to LCID8, index=4 corresponds to LCID9, and index=5 corresponds to LCID31. That is, the first 6 bits of the 8 bits in the bitmap are used to represent LCID 5/6/7/8/9/31 respectively. The last 2 bits can be empty or 0, and the following corresponds to a buffer size of each LCID that has to-be-transmitted data in order.
7. An LCID index. The LCID index is used to identify the corresponding LCID. For example, in case that the SCG only has an LCID/drbID of 5/6/7/8/9/31 associated with the DRB or associated with the RLC bearer for uplink transmission, the LCID is sorted and encoded according to the preset order, that is: index=0 corresponds to LCID5, index=1 corresponds to LCID6, index=2 corresponds to LCID7, index=3 corresponds to LCID8, index=4 corresponds to LCID9, index=5 corresponds to LCID31, and indexes 0, 1, 2, 3, 4 and 5 are recorded.
8. LCID bitmap length indication information. The indication information indicates a length of the LCID bitmap, for example, the length of the LCID bitmap can be 8 bits, 16 bits, 32 bits, etc. The LCs associated with DRB or associated with RLC bearers for uplink transmission are included in order, and the excess number of bits is set to 0.
9. LCID index length indication information. The indication information indicates a length of the LCID index, for example, the length of the LCID bitmap can be 3 bits, 4 bits, 5 bits, etc. The LCs associated with DRB or associated with RLC bearers for uplink transmission are included in order, and the excess number of bits is set to 0.
10. Buffer data information indicating the amount of buffer data. The amount of buffer data can be in units of per LCG or in units of per LC.
11. Indication information of whether there are unreported BSRs, which is used for indicating whether there are currently unreported BSRs by the SCG.

For example, index 66 may be used to represent the target LCID value and the target LCID value corresponds to a BSR for a predetermined format of the SCG.

When the LCID value corresponds to index 66, after receiving the target BSR, the network device can determine that the target BSR is the BSR for the predetermined format of the SCG. The network device reads the information in the target BSR, and obtains SCG index, LCG, LC, buffered data and other information, to determine that which bearers of SCG have to-be-transmitted data.

In an embodiment, in case that the target information includes the target BSR, a reserved bit of a MAC subheader corresponding to the target BSR includes any one of the following.
1. In case that the MAC subheader includes one reserved bit, the reserved bit represents that whether the target BSR is the BSR of the SCG.

For example, in case that a reserved bit R of the MAC subheader of the MAC sub-PDU where the BSR MAC CE is located is 1, it may be indicated that the target BSR is the BSR of SCG; and in case that the reserved bit R is 0, it may be indicated that the target BSR is not the BSR of SCG.

Alternatively, in case that the reserved bit R is 0, the reserved bit R may indicate that the target BSR is the BSR of SCG; and in case that the reserved bit R is 1, the reserved bit R may indicate that the target BSR is not the BSR of SCG.

After receiving the target BSR, the network device can determine that whether the target BSR is the BSR of the SCG based on the value of the reserved bit of the MAC subheader corresponding to the target BSR. The network device reads the information in the target BSR, and obtains which LCGs have to-be-transmitted data, to determine that which bearers of SCG have to-be-transmitted data.

2. In case that the MAC subheader includes two reserved bits, any one of the two reserved bits represents that whether the target BSR is the BSR of the SCG.

For example, in case that a first reserved bit R indicating the BSR of the SCG of the MAC subheader of the MAC sub-PDU where the BSR MAC CE is located is 1, it may be indicated that the target BSR is the BSR of SCG; and in case that the first reserved bit R is 0, it may be indicated that the target BSR is not the BSR of SCG.

Alternatively, in case that the first reserved bit R is 0, the first reserved bit R may indicate that the target BSR is the BSR of SCG; and in case that the first reserved bit R is 1, the first reserved bit R may indicate that the target BSR is not the BSR of SCG.

After receiving the target BSR, the network device can determine that whether the target BSR is the BSR of the SCG based on the value of the first reserved bit of the MAC subheader corresponding to the target BSR. The network device reads the information in the target BSR, and obtains which LCGs have to-be-transmitted data, to determine that which bearers of SCG have to-be-transmitted data.

3. In case that the MAC subheader includes two reserved bits, one of the two reserved bits represents that whether the target BSR is the BSR of the SCG, and the other of the two reserved bits represents that whether the target BSR is the BSR of the MCG.

In this case, the MAC subheader corresponding to the target BSR may include any one of the following:
one target LCID, used for indicating a format for the BSR of the SCG and/or a format for the BSR of the MCG; and
two target LCIDs, used for indicating the format for the BSR of the SCG and the format for the BSR of the MCG respectively.

For example, in case that the first reserved bit R indicating the BSR of the SCG of the MAC subheader of the MAC sub-PDU where the BSR MAC CE is located is 1, and a second reserved bit R indicating the BSR of MCG is also 1, it may be indicated that the target BSR includes both the BSR of SCG and the BSR of MCG; and in case that the MAC subheader only includes one target LCID indicating a long BSR, it may be indicated that the BSR of SCG and the BSR of MCG are both long BSR.

In case that the first reserved bit R indicating the BSR of the SCG of the MAC subheader of the MAC sub-PDU where the BSR MAC CE is located is 1, and a second reserved bit R indicating the BSR of MCG is also 1, it may be indicated that the target BSR includes both the BSR of SCG and the BSR of MCG; and in case that the MAC subheader includes two target LCIDs indicating that the BSR of SCG is a long BSR and the BSR of MCG is a short BSR, the BSR of SCG is a long BSR and the BSR of MCG is a short BSR.

After receiving the target BSR, the network device can determine that whether the target BSR is the BSR of the SCG and/or the BSR of the MCG based on the values of the first reserved bit and the second reserved bit of the MAC subheader corresponding to the target BSR. The network device reads the information in the target BSR, and obtains which LCGs have to-be-transmitted data, to determine that which bearers of SCG have to-be-transmitted data.

4. In case that the MAC subheader includes two reserved bits, the two reserved bits represents the SCG index, where the SCG index is used for indicating the target BSR is the BSR of which SCG.

For example, in case that the value of the two reserved bits R in the MAC sub-header of the MAC sub-PDU where the BSR MAC CE is located is 01, it may be indicated that the target BSR is the BSR of the SCG with an index=01.

After receiving the target BSR, the network device can determine that the target BSR is the BSR of which SCG based on values of the two reserved bits of the MAC subheader corresponding to the target BSR. The network device reads the information in the target BSR, and obtains which LCGs have to-be-transmitted data, to determine that which bearers of SCG have to-be-transmitted data.

A format for the target BSR includes any one of a short BSR, a long BSR, a short truncated BSR, a long truncated BSR or a predetermined BSR.

In the method for transmitting the buffer data status information of the SCG provided by the embodiment of the present application, the terminal indicates the buffer data status information of the SCG side by setting the relevant information of the BSR (LCID, eLCID, reserved bits, etc.) accordingly, which can implement low-cost and high-efficiency improvement of traditional networks.

In an embodiment, in case that the target information includes the target RRC signaling, the target RRC signaling includes DRB ID information. The DRB ID information is ID information of a DRB having to-be-transmitted data in the SCG, and is indicated by a bitmap. The bitmap includes any one of the following.
1. IDs of all MCGs and IDs of all SCGs.

After receiving the target RRC signaling, the network device can determine which DRBs have to-be-transmitted data by reading, in the target RRC signaling, the bitmaps of all DRBs.

2. A DRB ID of a RLC bearer in an SCG.

After receiving the target RRC signaling, the network device can determine which DRBs have to-be-transmitted data by reading, in the target RRC signaling, a bitmap indicating the DRB ID of the RLC bearer in the SCG.

3. A DRB ID of an RLC bearer in an SCG, where the RLC bearer does not belong to a split bearer.

After receiving the target RRC signaling, the network device can determine which DRBs have to-be-transmitted data by reading, in the target RRC signaling, a bitmap indicating the DRB ID of the RLC bearer in the SCG, where the RLC bearer does not belong to the split bearer.

4. A DRB ID of an RLC bearer in an SCG, where the RLC bearer only includes a split bearer of which a primary path is in the SCG in case that the RLC bearer is a split bearer.

After receiving the target RRC signaling, the network device can determine which DRBs have to-be-transmitted data by reading, in the target RRC signaling, a bitmap indicating the DRB ID of the RLC bearer in the SCG, where the RLC bearer only includes a split bearer of which a primary path is in the SCG in case that the RLC bearer is a split bearer.

In an embodiment, in case that the target information includes the target RRC signaling, the target RRC signaling includes data radio bearer (DRB) ID. The DRB ID is ID of a DRB having to-be-transmitted data in the SCG, and is any one of the following.
1. A DRB ID of a RLC bearer in the SCG. The DRB ID can be in a form of a DRB ID list, etc.;

After receiving the target RRC signaling, the network device can determine which DRBs have to-be-transmitted data by reading, in the target RRC signaling, list information indicating the DRB ID of the RLC bearer in the SCG.

2. A DRB ID of an RLC bearer in the SCG, where the RLC bearer does not belong to a split bearer. The DRB ID can be in the form of a DRB ID list, etc.

After receiving the target RRC signaling, the network device can determine which DRBs have to-be-transmitted data by reading, in the target RRC signaling, list information indicating the DRB ID of the RLC bearer in the SCG, where the RLC bearer does not belong to the split bearer.

3. A DRB ID of an RLC bearer in an SCG, where the RLC bearer only includes a split bearer of which a primary path is in the SCG in case that the RLC bearer is a split bearer. The DRB ID can be in the form of a DRB ID list, etc.

After receiving the target RRC signaling, the network device can determine which DRBs have to-be-transmitted data by reading, in the target RRC signaling, DRB list information indicating the DRB ID of the RLC bearer in the SCG, where the RLC bearer only includes a split bearer of which a primary path is in the SCG in case that the RLC bearer is a split bearer.

In an embodiment, in case that the target information includes the target RRC signaling, the target RRC signaling includes LCID information in the SCG that has to-be-transmitted data, and the logical channel identity information is indicated by a bitmap or by an LCID list.

The LCID information satisfies any one of the following.
1. The LCID information includes a bearer, where the bearer only includes a split bearer of which a primary path is in the SCG in case that the bearer is the split bearer.

After receiving the target RRC signaling, the network device can determine which LCs have to-be-transmitted data to determine which DRBs have to-be-transmitted data by reading, in the target RRC signaling, bitmap information or the LCID list indicating that the LCID information includes a bearer, where the bearer only includes the split bearer of which a primary path is in the SCG in case that the bearer is the split bearer.

2. The LCID information includes a bearer, where the bearer does not belong to a split bearer.

After receiving the target RRC signaling, the network device can determine which LCs have to-be-transmitted data to determine which DRBs have to-be-transmitted data by reading, in the target RRC signaling, bitmap information or the LCID list indicating that the LCID information includes bearers, where the bearer does not belong to the split bearer.

3. The LCID information includes a bearer, where the bearer does not belong to a split bearer of which a primary path is in the MCG.

After receiving the target RRC signaling, the network device can determine which LCs have to-be-transmitted data to determine which DRBs have to-be-transmitted data by reading, in the target RRC signaling, bitmap information or the LCID list indicating that the LCID information includes bearers, where the bearer does not belong to the split bearer of which a primary path is in the MCG.

In an embodiment, in case that the target information includes the target RRC signaling, the target RRC signaling includes LCG ID information, where the LCG ID information is ID information of a LCG having to-be-transmitted data in the SCG, and is indicated by a bitmap or by an LCG ID list.

After receiving the target RRC signaling, the network device can determine which LCGs have to-be-transmitted data to determine which DRBs have to-be-transmitted data by reading, in the target RRC signaling, bitmap information or the LCG ID list indicating that LCG ID information in the SCG that has to-be-transmitted data.

In an embodiment, in case that the target information includes the target RRC signaling, the target RRC signaling includes indication information of an SCG having to-be-transmitted data.

After receiving the target RRC signaling, the network device can determine the SCG has to-be-transmitted data by reading, in the target RRC signaling, indication information that the SCG has to-be-transmitted data.

In an embodiment, in case that the target information includes the target RRC signaling, the target RRC signaling includes information of a size of to-be-transmitted data in the SCG,
where the size of the to-be-transmitted data in the SCG is in units of any one of per DRB, per LC, per LCG or per SCG.

In an embodiment, the target RRC signaling may include any one of DRB information, LC information, LCG information, and indication information that the SCG has to-be-transmitted data, other than the information of a size of the to-be-transmitted data in the SCG.

After receiving the target RRC signaling, the network device can determine the specific size information of the to-be-transmitted data by the SCG by reading, in the target RRC signaling, information of the size of the to-be-transmitted data in the SCG, or any one of the DRB information, the LC information, the LCG information, and the indication information of the SCG having the to-be-transmitted data.

In the method for transmitting the buffer data status information of the SCG provided by the embodiment of the present application, the terminal indicates the buffer data status information of the SCG side by correspondingly setting the relevant information of the RRC signaling (the DRB ID information, the LCID information, the LCG ID information, the indication information of the SCG having the to-be-transmitted data, and the size information of the to-be-transmitted data in the SCG, etc.), which can implement low-cost and high-efficiency improvement of traditional networks.

In an embodiment, the method for transmitting the buffer data status information of the SCG may further include:
performing, based on the target information, one or more of the following:
reconfiguring the target bearer for the MCG and/or the SCG;
activating the SCG,
where the target bearer is used for transmitting data corresponding to the buffer data status information of the SCG.

It can be understood that after reading the target information, the network device can determine that the current SCG has to-be-transmitted data.

Therefore, the network device can reconfigure the target bearer for the MCG, to transmit data corresponding to the buffer data status information of the SCG to the network device through the target bearer.

Alternatively, the network device can reconfigure the target bearer for the SCG, to transmit data corresponding to the buffer data status information of the SCG to the network device through the target bearer.

Alternatively, the network device can simultaneously reconfigure the target bearer for both the MCG and the SCG, to transmit data corresponding to the buffer data status information of the SCG to the network device through the target bearer.

Alternatively, the network device can activate the SCG, so that the SCG is converted from the deactivated state to an activated state, to transmit data corresponding to the buffer data status information of the SCG to the network device through the target bearer.

In the method for transmitting the buffer data status information of the SCG provided by the embodiment of the present application, after determining that the SCG has to-be-transmitted data based on the target information, the network device can reconfigure the target bearer for the MCG and/or SCG, or activate the SCG to transmit the data corresponding to the buffer data status information of the SCG to the network device, which can ensure the smooth communication and improve the communication efficiency.

FIG. 5 is a second schematic flowchart of a method for transmitting buffer data status information of a secondary cell group (SCG) according to an embodiment of the present application. Referring to FIG. 5, the method for transmitting buffer data status information of the SCG may include the following steps.
step 510: determining that the SCG is in a deactivated state.
step 520: transmitting target information to a network device by a master cell group (MCG), where the target information is used for indicating the buffer data status information of the SCG;
the target information includes one or more of the following:
   a target buffer status report (BSR); or
   a target radio resource control (RRC) signaling.

It should be noted that the method for transmitting buffer data status information of the SCG provided by the embodiment of the present application may be performed by a terminal, such as a mobile phone, a computer, etc.

In a scenario where, for example, uplink data from the terminal reaches a radio link control (RLC) bearer of the SCG, the terminal will determine whether the SCG is in a deactivated state. If the SCG is in a deactivated state, the terminal will transmit the target information to the network device through the MCG.

After receiving the target information transmitted from the terminal through the MCG, the network device will parse the target information to obtain the buffer data status information of the SCG included in the target information to determine that the SCG has uplink data to be reported at this time, and then perform corresponding operations to report the uplink data on the SCG side to the network device.

The target information may include the target BSR and the target RRC signaling. The target BSR may refer to the BSR transmitted from the terminal to the network device through the MCG, and the target RRC signaling may refer to the RRC signaling transmitted from the terminal to the network device through the MCG.

In the method for transmitting the buffer data status information of the SCG, the network device receives the target information including the buffer data status information of the SCG transmitted from the terminal through the MCG side in case that the SCG is in the deactivated state, and the terminal indicates the buffer data status information on the SCG side. In case that the SCG is in the deactivated state, the network device makes a decisions and performs a corresponding operation based on the buffer data status information on the SCG side reported by the terminal, and uplink data on the SCG side is reported smoothly, which significantly improves the stability and efficiency of communication compared with the related art.

In an embodiment, in case that the target information includes the target BSR, a logical channel ID (LCID) in the MAC subPDU header where a BSR medium access control (MAC) control element (CE) corresponding to the target BSR is located may include:
a target LCID value corresponding to a reserved codepoint and/or index parameter value, where the target LCID value corresponds to a format for a BSR of the SCG,
where the format for the BSR of the SCG includes one or more of a short BSR, a long BSR, a short truncated BSR or a long truncated BSR.

It should be noted that the reserved codepoint and/or index parameter value may be a codepoint and/or an index parameter value reserved in the LCID, or a codepoint and/or an index parameter value reserved in an extended LCID (eLCID), or can be a preset codepoint and/or index parameter value other than the above two reserved codepoint and/or index parameter values.

For example, the reserved codepoint and/or index parameter value may be codepoint and/or index parameter values of 35 to 44 reserved in the LCID, or codepoint parameter values of 0 to 249 and/or index parameter values of 64 to 313 reserved in the eLCID, or codepoint parameter values of 0 to (216-1) and/or index parameter values of 320 to (216+319) reserved in the eLCID.

It should be noted that the codepoint parameter value and the index parameter value may be the same or different. For example, the codepoint parameter and index parameter in the LCID are the same, and the codepoint parameter and index parameter in the eLCID are different.

The following gives some examples.

1a. Any four of the reserved codepoint and/or index parameters of 35 to 44 correspond to four target LCID values respectively. The four target LCID values correspond to the short BSR, the long BSR, the short truncated BSR and the long truncated BSR format of the SCG, respectively.

For example, index 35 can be used to represent a first target LCID value, which corresponds to the short truncated BSR format of the SCG, index 36 can be used to represent a second target LCID value, which corresponds to the long truncated BSR format of the SCG, index 37 can be used to represent a third target LCID value, which corresponds to the short BSR format of the SCG, and index 38 can be used to represent a fourth target LCID value, which corresponds to the long BSR format of the SCG.

When the LCID value corresponds to index 35, after receiving the target BSR, the network device can determine that the target BSR is the short truncated BSR format of the SCG. The network device reads the information in the target BSR, obtains which LCGs have to-be-transmitted data, to determine that which bearers of SCG have to-be-transmitted data.

1b. Any four of the reserved codepoint parameters of 0 to 249 and/or index parameters of 64 to 313 correspond to four target LCID values respectively. The four target LCID values correspond to the short BSR, the long BSR, the short truncated BSR and the long truncated BSR format of the SCG, respectively.

For example, index 65 can be used to represent the first target LCID value, which corresponds to the short truncated BSR format of the SCG, and index 66 can be used to represent the second target LCID value, which corresponds to the long truncated BSR format of the SCG, index 67 can be used to represent the third target LCID value, which corresponds to the short BSR format of the SCG, and index 68 can be used to represent the fourth target LCID value, which corresponds to the long BSR format of the SCG.

When the LCID value corresponds to index 65, after receiving the target BSR, the network device can determine that the target BSR is the short truncated BSR format of the SCG. The network device reads the information in the target BSR, obtains which LCGs have to-be-transmitted data, to determine that which bearers of SCG have to-be-transmitted data.

1c. Four preset codepoint and/or index parameter values correspond to four target LCID values, respectively. The four target LCID values correspond to the short BSR, the long BSR, the short truncated BSR and the long truncated BSR of SCG respectively.

For example, a first preset codepoint and/or index parameter value may be used to represent the first target LCID value, and the first target LCID value corresponds to the short truncated BSR format of the SCG. A second preset codepoint and/or index parameter value may represent the second target LCID value, and the second target LCID value corresponds to the long truncated BSR format of the SCG. A third preset codepoint and/or index parameter value may represent the third target LCID value, and the third target LCID value corresponds to the short BSR format of the SCG. A fourth preset codepoint and/or the index parameter value may represent the fourth target LCID value, and the fourth target LCID value corresponds to the long BSR format of the SCG.

When the LCID value corresponds to the first preset codepoint and/or index parameter value, after receiving the target BSR, the network device can determine that the target BSR is the short truncated BSR format of the SCG. The network device reads the information in the target BSR, obtains which LCGs have to-be-transmitted data, to determine that which bearers of SCG have to-be-transmitted data.

2a. Any two of the reserved codepoint and/or index parameters of 35 to 44 correspond to two target LCID values respectively, and these two target LCID values can correspond to any two BSR format of the SCG. For example: the two target LCID values correspond to the short BSR and the long BSR format of the SCG respectively

Specifically, index 35 can be used to represent the first target LCID value, which corresponds to the short BSR format of the SCG, and index 36 represents the second target LCID value, which corresponds to the long BSR format of the SCG.

When the LCID value corresponds to index 35, after receiving the target BSR, the network device can determine that the target BSR is the short BSR format of the SCG. The network device reads the information in the target BSR, obtains which LCGs have to-be-transmitted data, to determine that which bearers of SCG have to-be-transmitted data.

2b. Any two of the reserved codepoint parameters of 0 to 249 and/or index parameters of 64 to 313 correspond to two target LCID values respectively, and these two target LCID values can correspond to any two BSR formats of the SCG. For example, the two target LCID values correspond to the short BSR and the long BSR format of the SCG respectively.

Specifically, index 65 can be used to represent the first target LCID value, which corresponds to the short BSR format of the SCG, and index 66 represents the second target LCID value, which corresponds to the long BSR format of the SCG.

When the LCID value corresponds to index 65, after receiving the target BSR, the network device can determine that the target BSR is the short BSR format of the SCG. The network device reads the information in the target BSR, obtains which LCGs have to-be-transmitted data, to determine that which bearers of SCG have to-be-transmitted data.

2c. Two preset codepoint and/or index parameter values correspond to two target LCID values respectively, and these two target LCID values can correspond to any two BSR formats of the SCG. For example, the two target LCID values correspond to the short BSR and the long BSR format of the SCG respectively.

For example, the first preset codepoint and/or index parameter value may be used to represent the first target LCID value corresponding to the short BSR format of the SCG, and the second preset codepoint and/or index parameter value may represent the second target LCID value and the second target LCID value corresponds to the long BSR format of the SCG.

When the LCID value corresponds to the first preset codepoint and/or index parameter value, after receiving the target BSR, the network device can determine that the target BSR is the short BSR format of the SCG. The network device reads the information in the target BSR, obtains which LCGs have to-be-transmitted data, to determine that which bearers of SCG have to-be-transmitted data.

3a. Any one of the reserved codepoint and/or index parameters of 35 to 44 corresponds to one target LCID value, and this target LCID value can be any one of the four BSR formats of the SCG. For example, the short BSR format of the SCG is defined as 0, the long BSR format is defined 1, the short truncated BSR format is defined as 2 and the long truncated BSR format is defined 3, then: in case that any one corresponding to one target LCID value is marked as 3, it is indicated that the target LCID value corresponds to the long truncated BSR format of the SCG; and in case that any one corresponding to one target LCID value is marked as 0, it is indicated that the target LCID value corresponds to the short BSR format of the SCG; and so on.

For example, index 37 can be used to represent the target LCID value, and it is assumed that the target LCID value is 3.

When the LCID value corresponds to index 37, after receiving the target BSR, the network device can determine that the target BSR is the long truncated BSR format of the SCG. The network device reads the information in the target BSR, obtains which LCGs have to-be-transmitted data, to determine that which bearers of SCG have to-be-transmitted data.

3b. Any one of the reserved codepoint parameters of 0 to 249 and/or index parameters of 64 to 313 corresponds to one target LCID value, and this target LCID value can be any one of the four BSR formats of the SCG. For example, the short BSR format of the SCG is defined as 0, the long BSR format is defined 1, the short truncated BSR format is defined as 2 and the long truncated BSR format is defined 3, then: in case that any one corresponding to one target LCID value is marked as 3, it is indicated that the target LCID value corresponds to the long truncated BSR format of the SCG; and in case that any one corresponding to one target LCID value is marked as 0, it is indicated that the target LCID value corresponds to the short BSR format of the SCG; and so on.

For example, index 37 or index 67 may be used to represent the target LCID value, and it is assumed that the target LCID value is 3. The target LCID value corresponds to the long truncated BSR format of the SCG.

When the LCID value corresponds to index 37 or index 67, after receiving the target BSR, the network device can determine that the target BSR is the long truncated BSR format of the SCG. The network device reads the information in the target BSR, obtains which LCGs have to-be-transmitted data, to determine that which bearers of SCG have to-be-transmitted data.

3c. One preset codepoint and/or index parameter value corresponds to one target LCID value, and this target LCID value can be any of the four BSR formats of the SCG. For example, the short BSR format of the SCG is defined as 0, the long BSR format is defined 1, the short truncated BSR format is defined as 2 and the long truncated BSR format is defined 3, then: in case that any one corresponding to one target LCID value is marked as 3, it is indicated that the target LCID value corresponds to the long truncated BSR format of the SCG; and in case that any one corresponding to one target LCID value is marked as 0, it is indicated that the target LCID value corresponds to the short BSR format of the SCG; and so on.

When the LCID value corresponds to the preset codepoint and/or index parameter value, after receiving the target BSR, the network device can determine the target BSR is what BSR format of the SCG based on the preset codepoint and/or index parameter value. The network device reads the information in the target BSR, obtains which LCGs have to-be-transmitted data, to determine that which bearers of SCG have to-be-transmitted data.

In an embodiment, in case that the target information includes the target BSR, the LCID corresponding to the target BSR may include the following.

The reserved codepoint and/or index parameter values correspond to the target LCID value, and the target LCID value corresponds to the BSR for the predetermined format of the SCG; the BSR MAC CE corresponding to the predetermined BSR format may include one or more of the following.
1. An SCG index, indicating that the target BSR is the BSR of which SCG.
2. An LCG bitmap, indicating that the SCG has to-be-transmitted data, where 1 bit represents one LCG.
3. An LCG ID, indicating that the SCG has to-be-transmitted data.
4. An LCID, indicating that the SCG has to-be-transmitted data.
5. An LCID bitmap, indicating that the SCG has to-be-transmitted data, where 1 bit represents one LC.
6. An LCID index bitmap, where the LCID index is used to identify the corresponding LCID. For example, in case that the SCG only has an LCID/drbID of 5/6/7/8/9/31 associated with a data radio bearer (DRB) or associated with a RLC bearer for uplink transmission, the LCID index bitmap is sorted and coded according to the preset order, such as the order of LCID size, that is, index=0 corresponds to LCID5, index=1 corresponds to LCID6, index=2 corresponds to LCID7, index=3 corresponds to LCID8, index=4 corresponds to LCID9, and index=5 corresponds to LCID31. That is, the first 6 bits of the 8 bits in the bitmap are used to represent LCID 5/6/7/8/9/31 respectively. The last 2 bits can be empty or 0, and the following corresponds to a buffer size of each LCID that has to-be-transmitted data in order.
7. An LCID index. The LCID index is used to identify the corresponding LCID. For example, in case that the SCG only has an LCID/drbID of 5/6/7/8/9/31 associated with the DRB or associated with the RLC bearer for uplink transmission, the LCID is sorted and encoded according to the preset order, that is: index=0 corresponds to LCID5, index=1 corresponds to LCID6, index=2 corresponds to LCID7, index=3 corresponds to LCID8, index=4 corresponds to LCID9, index=5 corresponds to LCID31, and indexes 0, 1, 2, 3, 4 and 5 are recorded.
8. LCID bitmap length indication information. The indication information indicates a length of the LCID bitmap, for example, the length of the LCID bitmap can be 8 bits, 16 bits, 32 bits, etc. The LCs associated with DRB or associated with RLC bearers for uplink transmission are included in order, and the excess number of bits is set to 0.
9. LCID index length indication information. The indication information indicates a length of the LCID index, for example, the length of the LCID bitmap can be 3 bits, 4 bits, 5 bits, etc. The LCs associated with DRB or associated with RLC bearers for uplink transmission are included in order, and the excess number of bits is set to 0.
10. Buffer data information indicating the amount of buffer data. The amount of buffer data can be in units of per LCG or in units of per LC.
11. Indication information of whether there are unreported BSRs, which is used for indicating whether there are currently unreported BSRs by the SCG.

For example, index 66 may be used to represent the target LCID value and the target LCID value corresponds to a BSR for a predetermined format of the SCG.

When the LCID value corresponds to index 66, after receiving the target BSR, the network device can determine that the target BSR is the BSR for the predetermined format of the SCG. The network device reads the information in the target BSR, and obtains SCG index, LCG, LC, buffered data and other information, to determine that which bearers of SCG have to-be-transmitted data.

In an embodiment, in case that the target information includes the target BSR, a reserved bit of a MAC subheader corresponding to the target BSR includes any one of the following.
1. In case that the MAC subheader includes one reserved bit, the reserved bit represents that whether the target BSR is the BSR of the SCG.

For example, in case that a reserved bit R of the MAC subheader of the MAC sub-PDU where the BSR MAC CE is located is 1, it may be indicated that the target BSR is the BSR of SCG; and in case that the reserved bit R is 0, it may be indicated that the target BSR is not the BSR of SCG.

Alternatively, in case that the reserved bit R is 0, the reserved bit R may indicate that the target BSR is the BSR of SCG; and in case that the reserved bit R is 1, the reserved bit R may indicate that the target BSR is not the BSR of SCG.

After receiving the target BSR, the network device can determine that whether the target BSR is the BSR of the SCG based on the value of the reserved bit of the MAC subheader corresponding to the target BSR. The network device reads the information in the target BSR, and obtains which LCGs have to-be-transmitted data, to determine that which bearers of SCG have to-be-transmitted data.

2. In case that the MAC subheader includes two reserved bits, any one of the two reserved bits represents that whether the target BSR is the BSR of the SCG.

For example, in case that a first reserved bit R indicating the BSR of the SCG of the MAC subheader of the MAC sub-PDU where the BSR MAC CE is located is 1, it may be indicated that the target BSR is the BSR of SCG; and in case that the first reserved bit R is 0, it may be indicated that the target BSR is not the BSR of SCG.

Alternatively, in case that the first reserved bit R is 0, the first reserved bit R may indicate that the target BSR is the BSR of SCG; and in case that the first reserved bit R is 1, the first reserved bit R may indicate that the target BSR is not the BSR of SCG.

After receiving the target BSR, the network device can determine that whether the target BSR is the BSR of the SCG based on the value of the first reserved bit of the MAC subheader corresponding to the target BSR. The network device reads the information in the target BSR, and obtains which LCGs have to-be-transmitted data, to determine that which bearers of SCG have to-be-transmitted data.

3. In case that the MAC subheader includes two reserved bits, one of the two reserved bits represents that whether the target BSR is the BSR of the SCG, and the other of the two reserved bits represents that whether the target BSR is the BSR of the MCG.

In this case, the MAC subheader corresponding to the target BSR may include any one of the following:
one target LCID, used for indicating a format for the BSR of the SCG and/or a format for the BSR of the MCG; and
two target LCIDs, used for indicating the format for the BSR of the SCG and the format for the BSR of the MCG respectively.

For example, in case that the first reserved bit R indicating the BSR of the SCG of the MAC subheader of the MAC sub-PDU where the BSR MAC CE is located is 1, and a second reserved bit R indicating the BSR of MCG is also 1, it may be indicated that the target BSR includes both the BSR of SCG and the BSR of MCG; and in case that the MAC subheader only includes one target LCID indicating a long BSR, it may be indicated that the BSR of SCG and the BSR of MCG are both long BSR.

In case that the first reserved bit R indicating the BSR of the SCG of the MAC subheader of the MAC sub-PDU where the BSR MAC CE is located is 1, and a second reserved bit R indicating the BSR of MCG is also 1, it may be indicated that the target BSR includes both the BSR of SCG and the BSR of MCG; and in case that the MAC subheader includes two target LCIDs indicating that the BSR of SCG is a long BSR and the BSR of MCG is a short BSR, the BSR of SCG is a long BSR and the BSR of MCG is a short BSR.

After receiving the target BSR, the network device can determine that whether the target BSR is the BSR of the SCG and/or the BSR of the MCG based on the values of the first reserved bit and the second reserved bit of the MAC subheader corresponding to the target BSR. The network device reads the information in the target BSR, and obtains which LCGs have to-be-transmitted data, to determine that which bearers of SCG have to-be-transmitted data.

4. In case that the MAC subheader includes two reserved bits, the two reserved bits represents the SCG index, where the SCG index is used for indicating the target BSR is the BSR of which SCG.

For example, in case that the value of the two reserved bits R in the MAC sub-header of the MAC sub-PDU where the BSR MAC CE is located is 01, it may be indicated that the target BSR is the BSR of the SCG with an index=01.

After receiving the target BSR, the network device can determine that the target BSR is the BSR of which SCG based on values of the two reserved bits of the MAC subheader corresponding to the target BSR. The network device reads the information in the target BSR, and obtains which LCGs have to-be-transmitted data, to determine that which bearers of SCG have to-be-transmitted data.

A format for the target BSR includes any one of a short BSR, a long BSR, a short truncated BSR, a long truncated BSR or a predetermined BSR.

In the method for transmitting the buffer data status information of the SCG provided by the embodiment of the present application, the terminal indicates the buffer data status information of the SCG side by setting the relevant information of the BSR (LCID, eLCID, reserved bits, etc.) accordingly, which can implement low-cost and high-efficiency improvement of traditional networks.

In an embodiment, in case that the target information includes the target RRC signaling, the target RRC signaling includes DRB ID information. The DRB ID information is ID information of a DRB having to-be-transmitted data in the SCG, and is indicated by a bitmap. The bitmap includes any one of the following.

### 1. IDs of all MCGs and IDs of all SCGs.

After receiving the target RRC signaling, the network device can determine which DRBs have to-be-transmitted data by reading, in the target RRC signaling, the bitmaps of all DRBs.

### 2. A DRB ID of a RLC bearer in an SCG.

After receiving the target RRC signaling, the network device can determine which DRBs have to-be-transmitted data by reading, in the target RRC signaling, a bitmap indicating the DRB ID of the RLC bearer in the SCG.

3. A DRB ID of an RLC bearer in an SCG, where the RLC bearer does not belong to a split bearer.

After receiving the target RRC signaling, the network device can determine which DRBs have to-be-transmitted data by reading, in the target RRC signaling, a bitmap indicating the DRB ID of the RLC bearer in the SCG, where the RLC bearer does not belong to the split bearer.

4. A DRB ID of an RLC bearer in an SCG, where the RLC bearer only includes a split bearer of which a primary path is in the SCG in case that the RLC bearer is a split bearer.

After receiving the target RRC signaling, the network device can determine which DRBs have to-be-transmitted data by reading, in the target RRC signaling, a bitmap indicating the DRB ID of the RLC bearer in the SCG, where the RLC bearer only includes a split bearer of which a primary path is in the SCG in case that the RLC bearer is a split bearer.

In an embodiment, in case that the target information includes the target RRC signaling, the target RRC signaling includes data radio bearer (DRB) ID. The DRB ID is ID of a DRB having to-be-transmitted data in the SCG, and is any one of the following.
1. A DRB ID of a RLC bearer in the SCG. The DRB ID can be in a form of a DRB ID list, etc.;

After receiving the target RRC signaling, the network device can determine which DRBs have to-be-transmitted data by reading, in the target RRC signaling, list information indicating the DRB ID of the RLC bearer in the SCG.

2. A DRB ID of an RLC bearer in the SCG, where the RLC bearer does not belong to a split bearer. The DRB ID can be in the form of a DRB ID list, etc.

After receiving the target RRC signaling, the network device can determine which DRBs have to-be-transmitted data by reading, in the target RRC signaling, list information indicating the DRB ID of the RLC bearer in the SCG, where the RLC bearer does not belong to the split bearer.

3. A DRB ID of an RLC bearer in an SCG, where the RLC bearer only includes a split bearer of which a primary path is in the SCG in case that the RLC bearer is a split bearer. The DRB ID can be in the form of a DRB ID list, etc.

After receiving the target RRC signaling, the network device can determine which DRBs have to-be-transmitted data by reading, in the target RRC signaling, DRB list information indicating the DRB ID of the RLC bearer in the SCG, where the RLC bearer only includes a split bearer of which a primary path is in the SCG in case that the RLC bearer is a split bearer.

In an embodiment, in case that the target information includes the target RRC signaling, the target RRC signaling includes LCID information in the SCG that has to-be-transmitted data, and the logical channel identity information is indicated by a bitmap or by an LCID list.

The LCID information satisfies any one of the following.
1. The LCID information includes a bearer, where the bearer only includes a split bearer of which a primary path is in the SCG in case that the bearer is the split bearer.

After receiving the target RRC signaling, the network device can determine which LCs have to-be-transmitted data to determine which DRBs have to-be-transmitted data by reading, in the target RRC signaling, bitmap information or the LCID list indicating that the LCID information includes a bearer, where the bearer only includes the split bearer of which a primary path is in the SCG in case that the bearer is the split bearer.

2. The LCID information includes a bearer, where the bearer does not belong to a split bearer.

After receiving the target RRC signaling, the network device can determine which LCs have to-be-transmitted data to determine which DRBs have to-be-transmitted data by reading, in the target RRC signaling, bitmap information or the LCID list indicating that the LCID information includes bearers, where the bearer does not belong to the split bearer.

3. The LCID information includes a bearer, where the bearer does not belong to a split bearer of which a primary path is in the MCG.

After receiving the target RRC signaling, the network device can determine which LCs have to-be-transmitted data to determine which DRBs have to-be-transmitted data by reading, in the target RRC signaling, bitmap information or the LCID list indicating that the LCID information includes bearers, where the bearer does not belong to the split bearer of which a primary path is in the MCG.

In an embodiment, in case that the target information includes the target RRC signaling, the target RRC signaling includes LCG ID information, where the LCG ID information is ID information of a LCG having to-be-transmitted data in the SCG, and is indicated by a bitmap or by an LCG ID list.

After receiving the target RRC signaling, the network device can determine which LCGs have to-be-transmitted data to determine which DRBs have to-be-transmitted data by reading, in the target RRC signaling, bitmap information or the LCG ID list indicating that LCG ID information in the SCG that has to-be-transmitted data.

In an embodiment, in case that the target information includes the target RRC signaling, the target RRC signaling includes indication information of an SCG having to-be-transmitted data.

After receiving the target RRC signaling, the network device can determine the SCG has to-be-transmitted data by reading, in the target RRC signaling, indication information that the SCG has to-be-transmitted data.

In an embodiment, in case that the target information includes the target RRC signaling, the target RRC signaling includes information of a size of to-be-transmitted data in the SCG,
where the size of the to-be-transmitted data in the SCG is in units of any one of per DRB, per LC, per LCG or per SCG.

In an embodiment, the target RRC signaling may include any one of DRB information, LC information, LCG information, and indication information that the SCG has to-be-transmitted data, other than the information of a size of the to-be-transmitted data in the SCG.

After receiving the target RRC signaling, the network device can determine the specific size information of the to-be-transmitted data by the SCG by reading, in the target RRC signaling, information of the size of the to-be-transmitted data in the SCG, or any one of the DRB information, the LC information, the LCG information, and the indication information of the SCG having the to-be-transmitted data.

In the method for transmitting the buffer data status information of the SCG provided by the embodiment of the present application, the terminal indicates the buffer data status information of the SCG side by correspondingly setting the relevant information of the RRC signaling (the DRB ID information, the LCID information, the LCG ID information, the indication information of the SCG having the to-be-transmitted data, and the size information of the to-be-transmitted data in the SCG, etc.), which can implement low-cost and high-efficiency improvement of traditional networks.

The solutions according to the embodiments of the present application may be applicable to various systems, especially 5G systems. For example, applicable systems may be a global system of mobile communication (GSM) system, a code division multiple access (CDMA) system, a wideband code division multiple access (WCDMA) general packet wireless service (general packet radio service, GPRS) system, a long term evolution (LTE) system, a LTE frequency division duplex (FDD) system, a LTE time division duplex (TDD) system, a long term evolution advanced (LTE-A) system, a universal mobile telecommunication system (UMTS), a worldwide interoperability for microwave access (WiMAX) system, a 5G New Radio (NR) system, etc. These various systems include a user equipment and a network device. The system may also include a core network part, such as an evolved packet system (EPS), a 5G system (5GS), and the like.

The terminal in the embodiments of the present application may be a device that provides voice and/or data connectivity to a user, a handheld device with a wireless connection function, or other processing device connected to a wireless modem. In different systems, the names of the terminal may be different. For example, in the 5G system, the terminal may be called as user equipment (UE). A radio terminal can communicate with one or more core networks (CN) via a radio access network (RAN), and the radio terminal can be a mobile terminal, such as a mobile phone (or "cellular "phone) and computers with mobile terminal, e.g., a portable mobile device, a pocket-sized mobile device, a hand-held mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A radio terminal may also be called a system, a subscriber unit, a subscriber station, a mobile station, a mobile, a remote station, an access point, a remote terminal, an access terminal, a user terminal, a user agent, and a user device, which are not limited in the embodiments of the present application.

The network device involved in the embodiments of the present application may be a base station, and the base station may include a plurality of cells providing services for the terminal. Depending on the specific application, the network device may also be called an access point, or may be a device in the access network that communicates with wireless terminal through one or more sectors on the air interface, or other names. Network device can be used to exchange received air frames with Internet Protocol (IP) packets, and act as a router between radio terminal and the rest of the access network, and the rest of the access network can include an Internet protocol (IP) communication network. The network devices may also coordinate attribute management for the air interface. For example, the network device in the embodiments of the present application may be a base transceiver station (BTS) in a global system for mobile communications (GSM) or a code division multiple access (CDMA), may also be a node B in a wide-band code division multiple access (WCDMA), may also be an evolutional node B (eNB or e-Node B) in a long term evolution (LTE) system, a 5G base station (gNB) in 5G network architecture (next generation system), may also be a Home evolved Node B (HeNB), a relay node (relay node), a femto, a pico base station (pico), etc., which are not limited in the embodiments of the present application. In some network structures, a network device may include a centralized unit (CU) node and a distributed unit (DU) node, and the centralized unit and the distributed unit may also be geographically separated.

Multi-input multi-output (MIMO) transmission can be performed between the network device and the terminal using one or more antennas and the MIMO transmission can be single user MIMO (SU-MIMO) or multiple user MIMO (MU-MIMO). According to the form and number of antenna combinations, MIMO transmission may be 2D-MIMO, 3D-MIMO, FD-MIMO, or massive-MIMO, and may also be diversity transmission, precoding transmission, or beamforming transmission.

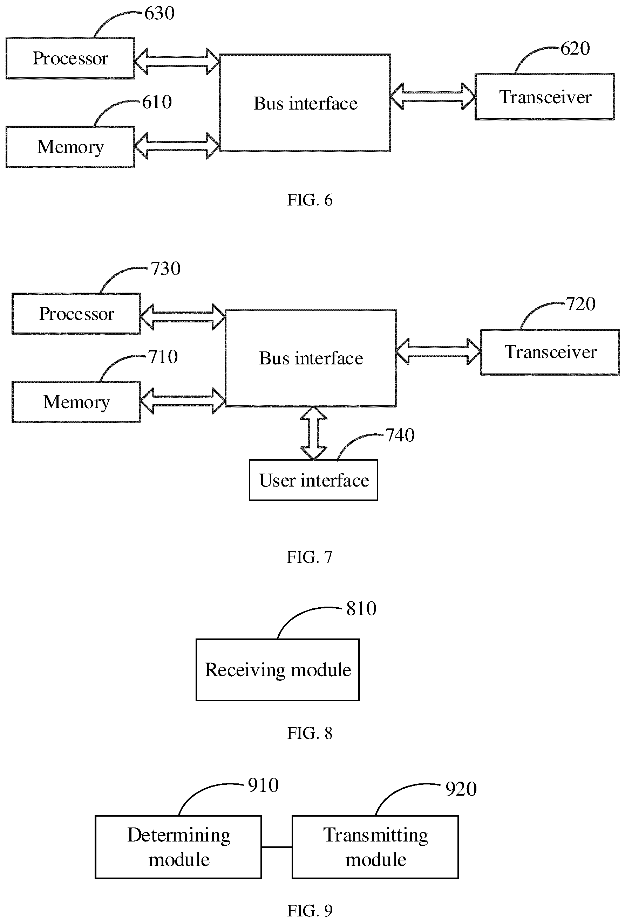

FIG. 6 is a schematic structural diagram of a network device according to an embodiment of the present application. Referring to FIG. 6, an embodiment of the present application provides a network device, including: a memory 610, a transceiver 620 and a processor 630.

The memory 610 is configured for storing a computer program; the transceiver 620 is configured for transmitting and receiving data under a control of the processor 630; and the processor 630 is configured for reading the computer program stored in the memory 610 and performing the following operations of:
receiving target information transmitted from a terminal through a master cell group (MCG) in case that a secondary cell group (SCG) is in a deactivated state, where the target information is used for indicating the buffer data status information of the SCG;
the target information includes one or more of the following:
   a target buffer status report (BSR); or
   target radio resource control (RRC) signaling.

In FIG. 6, a bus architecture may include any number of interconnected buses and bridges, which are linked together through various circuits of one or more processors represented by processor 630 and one or more memories represented by the memory 610. The bus architecture may also link together various other circuits, such as peripherals, voltage regulators, and power management circuits, which are well known in the art, and therefore will not be further described in the present application. The bus interface provides an interface. Transceiver 620 may be multiple elements, i.e., including a transmitter and a receiver, units for providing communication with various other devices over transmission media including wireless channels, wired channels, fiber optic cables, and the like. The processor 630 is responsible for managing the bus architecture and general processing, and the memory 610 may store data used by the processor 630 when performing operations.

The processor 630 may be a central processing unit (CPU), an application specific integrated circuit (ASIC), a field-programmable gate array (FPGA), or a complex programmable logic device (CPLD), the processor can also employ a multi-core architecture.

The processor 630 is configured to perform any one of the methods of the embodiments of the present application when executing the executable instructions by invoking the computer program stored in the memory 610. The processor 630 and memory 610 may also be physically separated.

In an embodiment, in case that the target information includes the target BSR, a logical channel ID (LCID) corresponding to the target BSR includes:
a target LCID value corresponding to a reserved codepoint and/or index parameter value, where the target LCID value corresponds to a format for a BSR of the SCG,
where one target LCID value corresponds to one format for a BSR of the SCG, and the format for the BSR of the SCG includes any one of a short BSR, a long BSR, a short truncated BSR and a long truncated BSR.

In an embodiment, in case that the target information includes the target BSR, a logical channel ID (LCID) corresponding to the target BSR includes:
a target LCID value corresponding to a reserved codepoint and/or index parameter value, where the target LCID value corresponds to a BSR for a predetermined format of the SCG,
where a BSR medium access control (MAC) control element (CE) corresponding to the BSR for the predetermined format of the SCG includes one or more of the following:
   an SCG index;
   a logical channel group (LCG) bitmap;
   an LCG ID;
   the LCID;
   an LCID bitmap;
   an LCID index bitmap;
   an LCID index;
   LCID bitmap length indication information;
   LCID index length indication information;
   buffer data information; or
   whether indication information of an unreported BSR is present.

In an embodiment, in case that the target information includes the target BSR, a reserved bit of a medium access control (MAC) subheader corresponding to the target BSR includes any one of the following:
in case that the MAC subheader includes one reserved bit, the reserved bit representing whether the target BSR is the BSR of the SCG;
in case that the MAC subheader includes two reserved bits, any one of the two reserved bits representing whether the target BSR is the BSR of the SCG;
in case that the MAC subheader includes two reserved bits, one of the two reserved bits representing whether the target BSR is the BSR of the SCG and the other of the two reserved bits representing whether the target BSR is the BSR of the MCG; or
in case that the MAC subheader includes two reserved bits, the two reserved bits representing the SCG index, where the SCG index is used for indicating the target BSR is the BSR of which SCG,
where a format for the target BSR includes any one of a short BSR, a long BSR, a short truncated BSR, a long truncated BSR or a predetermined BSR.

In an embodiment, in case of one of the two reserved bits representing whether the target BSR is the BSR of the SCG and the other of the two reserved bits representing whether the target BSR is the BSR of the MCG, the MAC subheader corresponding to the target BSR includes any one of the following:
one target LCID for indicating a format for the BSR of the SCG and/or a format for the BSR of the MCG; or
two target LCIDs for indicating the format for the BSR of the SCG and the format for the BSR of the MCG respectively.

In an embodiment, in case that the target information includes the target RRC signaling, the target RRC signaling includes data radio bearer (DRB) ID information, where the DRB ID information is ID information of a DRB having to-be-transmitted data in the SCG, and is indicated by a bitmap,
where the bitmap includes any one of the following:
IDs of all MCGs and IDs of all SCGs;
a DRB ID of a radio link control (RLC) bearer in an SCG;
a DRB ID of an RLC bearer in an SCG, where the RLC bearer does not belong to a split bearer; or
a DRB ID of an RLC bearer in an SCG, where the RLC bearer only includes a split bearer of which a primary path is in the SCG in case that the RLC bearer is a split bearer.

In an embodiment, in case that the target information includes the target RRC signaling, the target RRC signaling includes data radio bearer (DRB) ID, where the DRB ID is an ID of a DRB having to-be-transmitted data in the SCG, and is any one of the following:
a DRB ID of a radio link control (RLC) bearer in an SCG;
a DRB ID of an RLC bearer in an SCG, where the RLC bearer does not belong to a split bearer; or
a DRB ID of an RLC bearer in an SCG, where the RLC bearer only includes a split bearer of which a primary path is in the SCG in case that the RLC bearer is a split bearer.

In an embodiment, in case that the target information includes the target RRC signaling, the target RRC signaling includes logical channel ID (LCID) information, where the LCID information is ID information of a logical channel having to-be-transmitted data in the SCG, and is indicated by a bitmap or by an LCID list; and
the LCID information satisfies any one of the following:
the LCID information includes a bearer, where the bearer only includes a split bearer of which a primary path is in the SCG in case that the bearer is the split bearer;
the LCID information includes a bearer, where the bearer does not belong to a split bearer; or
the LCID information includes a bearer, where the bearer does not belong to a split bearer of which a primary path is in the MCG.

In an embodiment, in case that the target information includes the target RRC signaling, the target RRC signaling includes logical channel group ID (LCG ID) information, where the LCG ID information is ID information of a LCG having to-be-transmitted data in the SCG, and is indicated by a bitmap or by an LCG ID list.

In an embodiment, in case that the target information includes the target RRC signaling, the target RRC signaling includes indication information of an SCG having to-be-transmitted data.

In an embodiment, in case that the target information includes the target RRC signaling, the target RRC signaling includes information of a size of to-be-transmitted data in the SCG,
where the size of the to-be-transmitted data in the SCG is in units of any one of per DRB, per LC, per LCG or per SCG.

In an embodiment, the processor 630 is further used for:
performing, based on the target information, one or more of the following:
reconfiguring the target bearer for the MCG and/or the SCG;
activating the SCG,
where the target bearer is used for transmitting data corresponding to the buffer data status information of the SCG.

FIG. 7 is a schematic structural diagram of a terminal according to an embodiment of the present application. Referring to FIG. 7, an embodiment of the present application provides a terminal, including: a memory 710, a transceiver 720 and a processor 730.

The memory 710 is configured for storing a computer program; the transceiver 720 is configured for transmitting and receiving data under a control of the processor 730; and the processor 730 is configured for reading the computer program stored in the memory 710 and performing the following operations:
determining that a secondary cell group (SCG) is in a deactivated state;
transmitting target information to a network device by a master cell group (MCG), where the target information is used for indicating the buffer data status information of the SCG;
the target information includes one or more of the following:
   a target buffer status report (BSR); or
   target radio resource control (RRC) signaling.

In FIG. 7, a bus architecture may include any number of interconnected buses and bridges, which are linked together through various circuits of one or more processors represented by processor 730 and one or more memories represented by the memory 710. The bus architecture may also link together various other circuits, such as peripherals, voltage regulators, and power management circuits, which are well known in the art, and therefore will not be further described in the present application. The bus interface provides an interface. Transceiver 720 may be multiple elements, i.e., including a transmitter and a receiver, units for providing communication with various other devices over transmission media including wireless channels, wired channels, fiber optic cables, and the like. For different user equipment, the user interface 740 may also be an interface capable of externally or internally connecting the required equipment, and the connected equipment includes, but not limited to, a keypad, a display, a speaker, a microphone, a joystick, and the like.

The processor 730 is responsible for managing the bus architecture and general processing, and the memory 710 may store data used by the processor 730 when performing operations.

The processor 730 may be a central processing unit (CPU), an application specific integrated circuit (ASIC), a field-programmable gate array (FPGA), or a complex programmable logic device (CPLD), the processor can also employ a multi-core architecture.

The processor 730 is configured to perform any one of the methods of the embodiments of the present application when executing the executable instructions by invoking the computer program stored in the memory 710. The processor 730 and memory 710 may also be physically separated.

In an embodiment, in case that the target information includes the target BSR, a logical channel ID (LCID) corresponding to the target BSR includes:
a target LCID value corresponding to a reserved codepoint and/or index parameter value, where the target LCID value corresponds to a format for a BSR of the SCG,
where the format for the BSR of the SCG includes one or more of a short BSR, a long BSR, a short truncated BSR or a long truncated BSR.

In an embodiment, in case that the target information includes the target BSR, a logical channel ID (LCID) corresponding to the target BSR includes:
a target LCID value corresponding to a reserved codepoint and/or index parameter value, where the target LCID value corresponds to a BSR for a predetermined format of the SCG,
where a BSR medium access control (MAC) control element (CE) corresponding to the BSR for the predetermined format of the SCG includes one or more of the following:
   an SCG index;
   a logical channel group (LCG) bitmap;
   an LCG ID;
   the LCID;
   an LCID bitmap;
   an LCID index bitmap;
   an LCID index;
   LCID bitmap length indication information;
   LCID index length indication information;
   buffer data information; or
   whether indication information of an unreported BSR is present.

In an embodiment, in case that the target information includes the target BSR, a reserved bit of a medium access control (MAC) subheader corresponding to the target BSR includes any one of the following:
in case that the MAC subheader includes one reserved bit, the reserved bit representing whether the target BSR is the BSR of the SCG;
in case that the MAC subheader includes two reserved bits, any one of the two reserved bits representing whether the target BSR is the BSR of the SCG;
in case that the MAC subheader includes two reserved bits, one of the two reserved bits representing whether the target BSR is the BSR of the SCG and the other of the two reserved bits representing whether the target BSR is the BSR of the MCG; or
in case that the MAC subheader includes two reserved bits, the two reserved bits representing the SCG index, where the SCG index is used for indicating the target BSR is the BSR of which SCG,
where a format for the target BSR includes any one of a short BSR, a long BSR, a short truncated BSR, a long truncated BSR or a predetermined BSR.

In an embodiment, in case of one of the two reserved bits representing whether the target BSR is the BSR of the SCG and the other of the two reserved bits representing whether the target BSR is the BSR of the MCG, the MAC subheader corresponding to the target BSR includes any one of the following:
one target LCID for indicating a format for the BSR of the SCG and/or a format for the BSR of the MCG; or
two target LCIDs for indicating the format for the BSR of the SCG and the format for the BSR of the MCG respectively.

In an embodiment, in case that the target information includes the target RRC signaling, the target RRC signaling includes data radio bearer (DRB) ID information, where the DRB ID information is ID information of a DRB having to-be-transmitted data in the SCG, and is indicated by a bitmap,
where the bitmap includes any one of the following:
IDs of all MCGs and IDs of all SCGs;
a DRB ID of a radio link control (RLC) bearer in an SCG;
a DRB ID of an RLC bearer in an SCG, where the RLC bearer does not belong to a split bearer; or
a DRB ID of an RLC bearer in an SCG, where the RLC bearer only includes a split bearer of which a primary path is in the SCG in case that the RLC bearer is a split bearer.

In an embodiment, in case that the target information includes the target RRC signaling, the target RRC signaling includes data radio bearer (DRB) ID, where the DRB ID is an ID of a DRB having to-be-transmitted data in the SCG, and is any one of the following:
a DRB ID of a radio link control (RLC) bearer in an SCG;
a DRB ID of an RLC bearer in an SCG, where the RLC bearer does not belong to a split bearer; or
a DRB ID of an RLC bearer in an SCG, where the RLC bearer only includes a split bearer of which a primary path is in the SCG in case that the RLC bearer is a split bearer.

In an embodiment, in case that the target information includes the target RRC signaling, the target RRC signaling includes logical channel ID (LCID) information, where the LCID information is ID information of a logical channel having to-be-transmitted data in the SCG, and is indicated by a bitmap or by an LCID list; and
the LCID information satisfies any one of the following:
the LCID information includes a bearer, where the bearer only includes a split bearer of which a primary path is in the SCG in case that the bearer is the split bearer;
the LCID information includes a bearer, where the bearer does not belong to a split bearer; or
the LCID information includes a bearer, where the bearer does not belong to a split bearer of which a primary path is in the MCG.

In an embodiment, in case that the target information includes the target RRC signaling, the target RRC signaling includes logical channel group ID (LCG ID) information, where the LCG ID information is ID information of a LCG having to-be-transmitted data in the SCG, and is indicated by a bitmap or by an LCG ID list.

In an embodiment, in case that the target information includes the target RRC signaling, the target RRC signaling includes indication information of an SCG having to-be-transmitted data.

In an embodiment, in case that the target information includes the target RRC signaling, the target RRC signaling includes information of a size of to-be-transmitted data in the SCG,
where the size of the to-be-transmitted data in the SCG is in units of any one of per DRB, per LC, per LCG or per SCG.

FIG. 8 is a first schematic structural diagram of an apparatus for transmitting buffer data status information of a secondary cell group (SCG) according to an embodiment of the present application. Referring to FIG. 8, the apparatus for transmitting the buffer data status information of the SCG includes:
a receiving module 810, configured for receiving, in case that a secondary cell group (SCG) is in a deactivated state, target information transmitted from a terminal through a master cell group (MCG), where the target information is used for indicating the buffer data status information of the SCG;
the target information includes one or more of the following:
   a target buffer status report (BSR); or
   target radio resource control (RRC) signaling.

In an embodiment, in case that the target information includes the target BSR, a logical channel ID (LCID) corresponding to the target BSR includes:
a target LCID value corresponding to a reserved codepoint and/or index parameter value, where the target LCID value corresponds to a format for a BSR of the SCG,
where the format for the BSR of the SCG includes one or more of a short BSR, a long BSR, a short truncated BSR or a long truncated BSR.

In an embodiment, in case that the target information includes the target BSR, a logical channel ID (LCID) corresponding to the target BSR includes:
a target LCID value corresponding to a reserved codepoint and/or index parameter value, where the target LCID value corresponds to a BSR for a predetermined format of the SCG,
where a BSR medium access control (MAC) control element (CE) corresponding to the BSR for the predetermined format of the SCG includes one or more of the following:
   an SCG index;
   a logical channel group (LCG) bitmap;
   an LCG ID;
   the LCID;
   an LCID bitmap;
   an LCID index bitmap;
   an LCID index;
   LCID bitmap length indication information;
   LCID index length indication information;
   buffer data information; or
   whether indication information of an unreported BSR is present.

In an embodiment, in case that the target information includes the target BSR, a reserved bit of a medium access control (MAC) subheader corresponding to the target BSR includes any one of the following:
in case that the MAC subheader includes one reserved bit, the reserved bit representing whether the target BSR is the BSR of the SCG;
in case that the MAC subheader includes two reserved bits, any one of the two reserved bits representing whether the target BSR is the BSR of the SCG;
in case that the MAC subheader includes two reserved bits, one of the two reserved bits representing whether the target BSR is the BSR of the SCG and the other of the two reserved bits representing whether the target BSR is the BSR of the MCG; or
in case that the MAC subheader includes two reserved bits, the two reserved bits representing the SCG index, where the SCG index is used for indicating the target BSR is the BSR of which SCG,
where a format for the target BSR includes any one of a short BSR, a long BSR, a short truncated BSR, a long truncated BSR or a predetermined BSR.

In an embodiment, in case of one of the two reserved bits representing whether the target BSR is the BSR of the SCG and the other of the two reserved bits representing whether the target BSR is the BSR of the MCG, the MAC subheader corresponding to the target BSR includes any one of the following:
one target LCID for indicating a format for the BSR of the SCG and/or a format for the BSR of the MCG; or
two target LCIDs for indicating the format for the BSR of the SCG and the format for the BSR of the MCG respectively.

In an embodiment, in case that the target information includes the target RRC signaling, the target RRC signaling includes data radio bearer (DRB) ID information, where the DRB ID information is ID information of a DRB having to-be-transmitted data in the SCG, and is indicated by a bitmap,
where the bitmap includes any one of the following:
IDs of all MCGs and IDs of all SCGs;
a DRB ID of a radio link control (RLC) bearer in an SCG;
a DRB ID of an RLC bearer in an SCG, where the RLC bearer does not belong to a split bearer; or
a DRB ID of an RLC bearer in an SCG, where the RLC bearer only includes a split bearer of which a primary path is in the SCG in case that the RLC bearer is a split bearer.

In an embodiment, in case that the target information includes the target RRC signaling, the target RRC signaling includes data radio bearer (DRB) ID, where the DRB ID is an ID of a DRB having to-be-transmitted data in the SCG, and is any one of the following:
a DRB ID of a radio link control (RLC) bearer in an SCG;
a DRB ID of an RLC bearer in an SCG, where the RLC bearer does not belong to a split bearer; or
a DRB ID of an RLC bearer in an SCG, where the RLC bearer only includes a split bearer of which a primary path is in the SCG in case that the RLC bearer is a split bearer.

In an embodiment, in case that the target information includes the target RRC signaling, the target RRC signaling includes logical channel ID (LCID) information, where the LCID information is ID information of a logical channel having to-be-transmitted data in the SCG, and is indicated by a bitmap or by an LCID list; and
the LCID information satisfies any one of the following:
the LCID information includes a bearer, where the bearer only includes a split bearer of which a primary path is in the SCG in case that the bearer is the split bearer;
the LCID information includes a bearer, where the bearer does not belong to a split bearer; or
the LCID information includes a bearer, where the bearer does not belong to a split bearer of which a primary path is in the MCG.

In an embodiment, in case that the target information includes the target RRC signaling, the target RRC signaling includes logical channel group ID (LCG ID) information, where the LCG ID information is ID information of a LCG having to-be-transmitted data in the SCG, and is indicated by a bitmap or by an LCG ID list.

In an embodiment, in case that the target information includes the target RRC signaling, the target RRC signaling includes indication information of an SCG having to-be-transmitted data.

In an embodiment, in case that the target information includes the target RRC signaling, the target RRC signaling includes information of a size of to-be-transmitted data in the SCG,
where the size of the to-be-transmitted data in the SCG is in units of any one of per DRB, per LC, per LCG or per SCG.

In an embodiment, the apparatus for transmitting the buffer data status information of the secondary cell group may further include:
a processing module (not shown), configured for:
performing, based on the target information, one or more of the following:
reconfiguring the target bearer for the MCG and/or the SCG;
activating the SCG,
where the target bearer is used for transmitting data corresponding to the buffer data status information of the SCG.

FIG. 9 is a second schematic structural diagram of an apparatus for transmitting buffer data status information of a secondary cell group (SCG) according to an embodiment of the present application. Referring to FIG. 9, the apparatus for transmitting the buffer data status information of the SCG includes:
a determining module 910, configured for determining that the SCG is in a deactivated state;
a transmitting module 920, configured for transmitting target information to a network device by a master cell group (MCG), where the target information is used for indicating the buffer data status information of the SCG;
the target information includes one or more of the following:
   a target buffer status report (BSR); or
   target radio resource control (RRC) signaling.

In an embodiment, in case that the target information includes the target BSR, a logical channel ID (LCID) corresponding to the target BSR includes:
a target LCID value corresponding to a reserved codepoint and/or index parameter value, where the target LCID value corresponds to a format for a BSR of the SCG,
where the format for the BSR of the SCG includes one or more of a short BSR, a long BSR, a short truncated BSR or a long truncated BSR.

In an embodiment, in case that the target information includes the target BSR, a logical channel ID (LCID) corresponding to the target BSR includes:
a target LCID value corresponding to a reserved codepoint and/or index parameter value, where the target LCID value corresponds to a BSR for a predetermined format of the SCG,
where a BSR medium access control (MAC) control element (CE) corresponding to the BSR for the predetermined format of the SCG includes one or more of the following:
   an SCG index;
   a logical channel group (LCG) bitmap;
   an LCG ID;
   the LCID;
   an LCID bitmap;
   an LCID index bitmap;
   an LCID index;
   LCID bitmap length indication information;
   LCID index length indication information;
   buffer data information; or
   whether indication information of an unreported BSR is present.

In an embodiment, in case that the target information includes the target BSR, a reserved bit of a medium access control (MAC) subheader corresponding to the target BSR includes any one of the following:
in case that the MAC subheader includes one reserved bit, the reserved bit representing whether the target BSR is the BSR of the SCG;
in case that the MAC subheader includes two reserved bits, any one of the two reserved bits representing whether the target BSR is the BSR of the SCG;
in case that the MAC subheader includes two reserved bits, one of the two reserved bits representing whether the target BSR is the BSR of the SCG and the other of the two reserved bits representing whether the target BSR is the BSR of the MCG; or
in case that the MAC subheader includes two reserved bits, the two reserved bits representing the SCG index, where the SCG index is used for indicating the target BSR is the BSR of which SCG,
where a format for the target BSR includes any one of a short BSR, a long BSR, a short truncated BSR, a long truncated BSR or a predetermined BSR.

In an embodiment, in case of one of the two reserved bits representing whether the target BSR is the BSR of the SCG and the other of the two reserved bits representing whether the target BSR is the BSR of the MCG, the MAC subheader corresponding to the target BSR includes any one of the following:
one target LCID for indicating a format for the BSR of the SCG and/or a format for the BSR of the MCG; or
two target LCIDs for indicating the format for the BSR of the SCG and the format for the BSR of the MCG respectively.

In an embodiment, in case that the target information includes the target RRC signaling, the target RRC signaling includes data radio bearer (DRB) ID information, where the DRB ID information is ID information of a DRB having to-be-transmitted data in the SCG, and is indicated by a bitmap,
where the bitmap includes any one of the following:
IDs of all MCGs and IDs of all SCGs;
a DRB ID of a radio link control (RLC) bearer in an SCG;
a DRB ID of an RLC bearer in an SCG, where the RLC bearer does not belong to a split bearer; or
a DRB ID of an RLC bearer in an SCG, where the RLC bearer only includes a split bearer of which a primary path is in the SCG in case that the RLC bearer is a split bearer.

In an embodiment, in case that the target information includes the target RRC signaling, the target RRC signaling includes data radio bearer (DRB) ID, where the DRB ID is an ID of a DRB having to-be-transmitted data in the SCG, and is any one of the following:
a DRB ID of a radio link control (RLC) bearer in an SCG;
a DRB ID of an RLC bearer in an SCG, where the RLC bearer does not belong to a split bearer; or
a DRB ID of an RLC bearer in an SCG, where the RLC bearer only includes a split bearer of which a primary path is in the SCG in case that the RLC bearer is a split bearer.

In an embodiment, in case that the target information includes the target RRC signaling, the target RRC signaling includes logical channel ID (LCID) information, where the LCID information is ID information of a logical channel having to-be-transmitted data in the SCG, and is indicated by a bitmap or by an LCID list; and
the LCID information satisfies any one of the following:
the LCID information includes a bearer, where the bearer only includes a split bearer of which a primary path is in the SCG in case that the bearer is the split bearer;
the LCID information includes a bearer, where the bearer does not belong to a split bearer; or
the LCID information includes a bearer, where the bearer does not belong to a split bearer of which a primary path is in the MCG.

In an embodiment, in case that the target information includes the target RRC signaling, the target RRC signaling includes logical channel group ID (LCG ID) information, where the LCG ID information is ID information of a LCG having to-be-transmitted data in the SCG, and is indicated by a bitmap or by an LCG ID list.

In an embodiment, in case that the target information includes the target RRC signaling, the target RRC signaling includes indication information of an SCG having to-be-transmitted data.

In an embodiment, in case that the target information includes the target RRC signaling, the target RRC signaling includes information of a size of to-be-transmitted data in the SCG,
where the size of the to-be-transmitted data in the SCG is in units of any one of per DRB, per LC, per LCG or per SCG.

It should be noted here that the above-mentioned apparatus according to the embodiments of the present application can implement all the method steps implemented by the above-mentioned method embodiments, and can achieve the same effect. The same parts and beneficial effects as the same method embodiments will not be repeated here.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor readable storage medium. Based on such understanding, the technical solutions of the present application in essence or a part of the technical solutions that contributes to the related art, or all or part of the technical solutions, may be embodied in the form of a software product, which is stored in a storage medium, including several instructions to cause a computer device (which may be a personal computer, server, or network device, etc.) or a processor to perform all or part of steps of the methods described in the respective embodiments of the present application. The storage medium described above includes various media that can store program codes such as U disk, mobile hard disk, read-only memory (ROM), random access memory (RAM), magnetic disk, or optical disk.

An embodiment of the present application further provides a non-transitory processor-readable storage medium storing a computer program that causes a processor to perform steps of the methods described above, for example, including:
receiving target information transmitted from a terminal through a master cell group (MCG) in case that a secondary cell group (SCG) is in a deactivated state, where the target information is used for indicating the buffer data status information of the SCG;
the target information includes one or more of the following:
   a target buffer status report (BSR); or
   target radio resource control (RRC) signaling; alternatively,
   determining that a secondary cell group (SCG) is in a deactivated state;
   transmitting target information to a network device by a master cell group (MCG), where the target information is used for indicating the buffer data status information of the SCG;
   the target information includes one or more of the following:
      a target buffer status report (BSR); or
      target radio resource control (RRC) signaling.

The processor readable storage medium can be any available medium or data storage device that can be accessed by the processor, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof can be implemented by computer-executable instructions. These computer-executable instructions may be provided to processors of a general-purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means can perform the functions specified in one or more flows of the flowchart and/or one or more blocks of the block diagram.

These processor-executable instructions can also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A method for transmitting for transmitting buffer data status information of a secondary cell group, SCG, comprising:
determining that the SCG is in a deactivated state;
transmitting target information to a network device by a master cell group, MCG, wherein the target information is used for indicating the buffer data status information of the SCG;
the target information comprises one or more of the following:
a target buffer status report, BSR; or
target radio resource control, RRC, signaling.

2. The method of claim 1, wherein in case that the target information comprises the target BSR, a logical channel ID, LCID, corresponding to the target BSR comprises:
a target LCID value corresponding to a reserved codepoint and/or index parameter value, wherein the target LCID value corresponds to a format for a BSR of the SCG,
wherein the format for the BSR of the SCG comprises one or more of a short BSR, a long BSR, a short truncated BSR or a long truncated BSR.

3. The method of claim 1, wherein in case that the target information comprises the target BSR, a logical channel ID, LCID, corresponding to the target BSR comprises:
a target LCID value corresponding to a reserved codepoint and/or index parameter value, wherein the target LCID value corresponds to a BSR for a predetermined format of the SCG,
wherein a BSR medium access control, MAC, control element, CE, corresponding to the BSR for the predetermined format of the SCG comprises one or more of the following:
an SCG index;
a logical channel group, LCG, bitmap;
an LCG ID;
the LCID;
an LCID bitmap;
an LCID index bitmap;
an LCID index;
LCID bitmap length indication information;
LCID index length indication information;
buffer data information; or
whether indication information of an unreported BSR is present.

4. The method of claim 1, wherein in case that the target information comprises the target BSR, a reserved bit of a medium access control, MAC, subheader corresponding to the target BSR comprises any one of the following:
in case that the MAC subheader comprises one reserved bit, the reserved bit representing whether the target BSR is the BSR of the SCG;
in case that the MAC subheader comprises two reserved bits, any one of the two reserved bits representing whether the target BSR is the BSR of the SCG;
in case that the MAC subheader comprises two reserved bits, one of the two reserved bits representing whether the target BSR is the BSR of the SCG and the other of the two reserved bits representing whether the target BSR is the BSR of the MCG; or
in case that the MAC subheader comprises two reserved bits, the two reserved bits representing the SCG index, wherein the SCG index is used for indicating the target BSR is the BSR of which SCG,
wherein a format for the target BSR comprises any one of a short BSR, a long BSR, a short truncated BSR, a long truncated BSR or a predetermined BSR.

5. The method of claim 4, wherein in case of one of the two reserved bits representing whether the target BSR is the BSR of the SCG and the other of the two reserved bits representing whether the target BSR is the BSR of the MCG, the MAC subheader corresponding to the target BSR comprises any one of the following:
one target LCID for indicating a format for the BSR of the SCG and/or a format for the BSR of the MCG; or
two target LCIDs for indicating the format for the BSR of the SCG and the format for the BSR of the MCG respectively.

6. The method of claim 1, wherein in case that the target information comprises the target RRC signaling, the target RRC signaling comprises data radio bearer, DRB, ID information, wherein the DRB ID information is ID information of a DRB having to-be-transmitted data in the SCG, and is indicated by a bitmap,
wherein the bitmap comprises any one of the following:
IDs of all MCGs and IDs of all SCGs;
a DRB ID of a radio link control, RLC, bearer in an SCG;
a DRB ID of an RLC bearer in an SCG, wherein the RLC bearer does not belong to a split bearer; or
a DRB ID of an RLC bearer in an SCG, wherein the RLC bearer only comprises a split bearer of which a primary path is in the SCG in case that the RLC bearer is a split bearer.

7. The method of claim 1, wherein in case that the target information comprises the target RRC signaling, the target RRC signaling comprises data radio bearer, DRB, ID, wherein the DRB ID is an ID of a DRB having to-be-transmitted data in the SCG, and is any one of the following:
a DRB ID of a radio link control, RLC, bearer in an SCG;
a DRB ID of an RLC bearer in an SCG, wherein the RLC bearer does not belong to a split bearer; or
a DRB ID of an RLC bearer in an SCG, wherein the RLC bearer only comprises a split bearer of which a primary path is in the SCG in case that the RLC bearer is a split bearer.

8. The method of claim 1, wherein in case that the target information comprises the target RRC signaling, the target RRC signaling comprises logical channel ID, LCID, information, wherein the LCID information is ID information of a logical channel having to-be-transmitted data in the SCG, and is indicated by a bitmap or by an LCID list; and
the LCID information satisfies any one of the following:
the LCID information comprises a bearer, wherein the bearer only comprises a split bearer of which a primary path is in the SCG in case that the bearer is the split bearer;
the LCID information comprises a bearer, wherein the bearer does not belong to a split bearer; or
the LCID information comprises a bearer, wherein the bearer does not belong to a split bearer of which a primary path is in the MCG.

9. The method of claim 1, wherein in case that the target information comprises the target RRC signaling, the target RRC signaling comprises logical channel group ID, LCG ID, information, wherein the LCG ID information is ID information of a LCG having to-be-transmitted data in the SCG, and is indicated by a bitmap or by an LCG ID list.

10. The method of claim 1, wherein in case that the target information comprises the target RRC signaling, the target RRC signaling comprises indication information of SCG having to-be-transmitted data.

11. The method of claim 1, wherein in case that the target information comprises the target RRC signaling, the target RRC signaling comprises information of a size of to-be-transmitted data in the SCG,
wherein the size of the to-be-transmitted data in the SCG is in units of any one of per DRB, per LC, per LCG or per SCG.

12. A method for transmitting for transmitting buffer data status information of a secondary cell group, SCG, comprising:
receiving target information transmitted from a terminal through a master cell group, MCG, in case that an SCG is in a deactivated state, wherein the target information is used for indicating the buffer data status information of the SCG;
the target information comprises one or more of the following:
a target buffer status report, BSR; or
target radio resource control, RRC, signaling.

13. The method of claim 12, further comprising:
performing, based on the target information, one or more of the following:
reconfiguring the target bearer for the MCG and/or the SCG;
activating the SCG,
wherein the target bearer is used for transmitting data corresponding to the buffer data status information of the SCG.

14. A terminal, comprising a processor, a memory storing a computer program, and a transceiver for receiving or transmitting data under a control of the processor,
wherein the computer program, when executed by the processor, causes the terminal to perform the following operations of:
determining that a secondary cell group, SCG, is in a deactivated state;
transmitting target information to a network device by a master cell group, MCG, wherein the target information is used for indicating the buffer data status information of the SCG;
the target information comprises one or more of the following:
a target buffer status report, BSR; or
target radio resource control, RRC, signaling.

15. The terminal of claim 14, wherein in case that the target information comprises the target BSR, a logical channel ID, LCID, corresponding to the target BSR comprises:
a target LCID value corresponding to a reserved codepoint and/or index parameter value, wherein the target LCID value corresponds to a format for a BSR of the SCG,
wherein the format for the BSR of the SCG comprises one or more of a short BSR, a long BSR, a short truncated BSR or a long truncated BSR.

16. The terminal of claim 14, wherein in case that the target information comprises the target BSR, a logical channel ID, LCID, corresponding to the target BSR comprises:
a target LCID value corresponding to a reserved codepoint and/or index parameter value, wherein the target LCID value corresponds to a BSR for a predetermined format of the SCG,
wherein a BSR medium access control, MAC, control element, CE, corresponding to the BSR for the predetermined format of the SCG comprises one or more of the following:
an SCG index;
a logical channel group, LCG, bitmap;
an LCG ID;
the LCID;
an LCID bitmap;
an LCID index bitmap;
an LCID index;
an LCID bitmap length indication information;
an LCID index length indication information;
buffer data information; or
whether indication information of an unreported BSR is present.

17. The terminal of claim 14, wherein in case that the target information comprises the target BSR, a reserved bit of a medium access control, MAC, subheader corresponding to the target BSR comprises any one of the following:
in case that the MAC subheader comprises one reserved bit, the reserved bit representing whether the target BSR is the BSR of the SCG;
in case that the MAC subheader comprises two reserved bits, any one of the two reserved bits representing whether the target BSR is the BSR of the SCG;
in case that the MAC subheader comprises two reserved bits, one of the two reserved bits representing whether the target BSR is the BSR of the SCG and the other of the two reserved bits representing whether the target BSR is the BSR of the MCG; or
in case that the MAC subheader comprises two reserved bits, the two reserved bits representing the SCG index, wherein the SCG index is used for indicating the target BSR is the BSR of which SCG,
wherein a format for the target BSR comprises any one of a short BSR, a long BSR, a short truncated BSR, a long truncated BSR or a predetermined BSR.

18. The terminal of claim 17, wherein in case of one of the two reserved bits representing whether the target BSR is the BSR of the SCG and the other of the two reserved bits representing whether the target BSR is the BSR of the MCG, the MAC subheader corresponding to the target BSR comprises any one of the following:
one target LCID for indicating a format for the BSR of the SCG and/or a format for the BSR of the MCG; or
two target LCIDs for indicating the format for the BSR of the SCG and the format for the BSR of the MCG respectively.

19. The terminal of claim 14, wherein in case that the target information comprises the target RRC signaling, the target RRC signaling comprises data radio bearer, DRB, ID information, wherein the DRB ID information is ID information of a DRB having to-be-transmitted data in the SCG, and is indicated by a bitmap,
wherein the bitmap comprises any one of the following:
IDs of all MCGs and IDs of all SCGs;
a DRB ID of a radio link control, RLC, bearer in an SCG;
a DRB ID of an RLC bearer in an SCG, wherein the RLC bearer does not belong to a split bearer; or
a DRB ID of an RLC bearer in an SCG, wherein the RLC bearer only comprises a split bearer of which a primary path is in the SCG in case that the RLC bearer is a split bearer.

20. The terminal of claim 14, wherein in case that the target information comprises the target RRC signaling, the target RRC signaling comprises data radio bearer, DRB, ID, wherein the DRB ID is an ID of a DRB having to-be-transmitted data in the SCG, and is any one of the following:
a DRB ID of a radio link control, RLC, bearer in an SCG;
a DRB ID of an RLC bearer in an SCG, wherein the RLC bearer does not belong to a split bearer; or
a DRB ID of an RLC bearer in an SCG, wherein the RLC bearer only comprises a split bearer of which a primary path is in the SCG in case that the RLC bearer is a split bearer.

21. The terminal of claim 14, wherein in case that the target information comprises the target RRC signaling, the target RRC signaling comprises logical channel ID, LCID, information, wherein the LCID information is ID information of a logical channel having to-be-transmitted data in the SCG, and is indicated by a bitmap or by an LCID list; and
the LCID information satisfies any one of the following:
the LCID information comprises a bearer, wherein the bearer only comprises a split bearer of which a primary path is in the SCG in case that the bearer is the split bearer;
the LCID information comprises a bearer, wherein the bearer does not belong to a split bearer; or
the LCID information comprises a bearer, wherein the bearer does not belong to a split bearer of which a primary path is in the MCG.

22. The terminal of claim 14, wherein in case that the target information comprises the target RRC signaling, the target RRC signaling comprises logical channel group ID, LCG ID, information, wherein the LCG ID information is ID information of a LCG having to-be-transmitted data in the SCG, and is indicated by a bitmap or by an LCG ID list.

23. The terminal of claim 14, wherein in case that the target information comprises the target RRC signaling, the target RRC signaling comprises indication information of SCG having to-be-transmitted data.

24. The terminal of claim 14, wherein in case that the target information comprises the target RRC signaling, the target RRC signaling comprises information of a size of to-be-transmitted data in the SCG,
wherein the size of the to-be-transmitted data in the SCG is in units of any one of per DRB, per LC, per LCG or per SCG.

25. A network device, comprising a processor, a memory storing a computer program, and a transceiver for transmitting and receiving data under a control of the processor,
wherein the computer program, when executed by the processor, causes the network device to perform the following operations of:
receiving target information transmitted from a terminal through a master cell group, MCG, in case that a secondary cell group, SCG, is in a deactivated state, wherein the target information is used for indicating the buffer data status information of the SCG;
the target information comprises one or more of the following:
a target buffer status report, BSR; or
target radio resource control, RRC, signaling.

26. The network device of claim 25, wherein the computer program, when executed by the processor, causes the network device to perform the following operations of:
performing, based on the target information, one or more of the following:
reconfiguring the target bearer for the MCG and/or the SCG;
activating the SCG,
wherein the target bearer is used for transmitting data corresponding to the buffer data status information of the SCG.

27. An apparatus for transmitting for transmitting buffer data status information of a secondary cell group, SCG, comprising:
a determining module, configured for determining that the SCG is in a deactivated state;
a transmitting module, configured for transmitting target information to a network device by a master cell group, MCG, wherein the target information is used for indicating the buffer data status information of the SCG;
the target information comprises one or more of the following:
a target buffer status report, BSR; or
target radio resource control, RRC, signaling.

28. The apparatus of claim 27, wherein in case that the target information comprises the target BSR, a logical channel ID, LCID, corresponding to the target BSR comprises:
a target LCID value corresponding to a reserved codepoint and/or index parameter value, wherein the target LCID value corresponds to a format for a BSR of the SCG,
wherein the format for the BSR of the SCG comprises one or more of a short BSR, a long BSR, a short truncated BSR or a long truncated BSR.

29. The apparatus of claim 27, wherein in case that the target information comprises the target BSR, a logical channel ID, LCID, corresponding to the target BSR comprises:
a target LCID value corresponding to a reserved codepoint and/or index parameter value, wherein the target LCID value corresponds to a BSR for a predetermined format of the SCG,
wherein a BSR medium access control, MAC, control element, CE, corresponding to the BSR for the predetermined format of the SCG comprises one or more of the following:
an SCG index;
a logical channel group, LCG, bitmap;
an LCG ID;
the LCID;
an LCID bitmap;
an LCID index bitmap;
an LCID index;
LCID bitmap length indication information;
LCID index length indication information;
buffer data information; or
whether indication information of an unreported BSR is present.

30. The apparatus of claim 27, wherein in case that the target information comprises the target BSR, a reserved bit of a medium access control, MAC, subheader corresponding to the target BSR comprises any one of the following:
in case that the MAC subheader comprises one reserved bit, the reserved bit representing whether the target BSR is the BSR of the SCG;
in case that the MAC subheader comprises two reserved bits, any one of the two reserved bits representing whether the target BSR is the BSR of the SCG;
in case that the MAC subheader comprises two reserved bits, one of the two reserved bits representing whether the target BSR is the BSR of the SCG and the other of the two reserved bits representing whether the target BSR is the BSR of the MCG; or
in case that the MAC subheader comprises two reserved bits, the two reserved bits representing the SCG index, wherein the SCG index is used for indicating the target BSR is the BSR of which SCG,
wherein a format for the target BSR comprises any one of a short BSR, a long BSR, a short truncated BSR, a long truncated BSR or a predetermined BSR.

31. The apparatus of claim 30, wherein in case of one of the two reserved bits representing whether the target BSR is the BSR of the SCG and the other of the two reserved bits representing whether the target BSR is the BSR of the MCG, the MAC subheader corresponding to the target BSR comprises any one of the following:
one target LCID for indicating a format for the BSR of the SCG and/or a format for the BSR of the MCG; or
two target LCIDs for indicating the format for the BSR of the SCG and the format for the BSR of the MCG respectively.

32. The apparatus of claim 27, wherein in case that the target information comprises the target RRC signaling, the target RRC signaling comprises data radio bearer, DRB, ID information, wherein the DRB ID information is ID information of a DRB having to-be-transmitted data in the SCG, and is indicated by a bitmap,
wherein the bitmap comprises any one of the following:
IDs of all MCGs and IDs of all SCGs;
a DRB ID of a radio link control, RLC, bearer in an SCG;
a DRB ID of an RLC bearer in an SCG, wherein the RLC bearer does not belong to a split bearer; or
a DRB ID of an RLC bearer in an SCG, wherein the RLC bearer only comprises a split bearer of which a primary path is in the SCG in case that the RLC bearer is a split bearer.

33. The apparatus of claim 27, wherein in case that the target information comprises the target RRC signaling, the target RRC signaling comprises data radio bearer, DRB, ID, wherein the DRB ID is an ID of a DRB having to-be-transmitted data in the SCG, and is any one of the following:
a DRB ID of a radio link control, RLC, bearer in an SCG;
a DRB ID of an RLC bearer in an SCG, wherein the RLC bearer does not belong to a split bearer; or
a DRB ID of an RLC bearer in an SCG, wherein the RLC bearer only comprises a split bearer of which a primary path is in the SCG in case that the RLC bearer is a split bearer.

34. The apparatus of claim 27, wherein in case that the target information comprises the target RRC signaling, the target RRC signaling comprises logical channel ID, LCID, information, wherein the LCID information is ID information of a logical channel having to-be-transmitted data in the SCG, and is indicated by a bitmap or by an LCID list; and
the LCID information satisfies any one of the following:
the LCID information comprises a bearer, wherein the bearer only comprises a split bearer of which a primary path is in the SCG in case that the bearer is the split bearer;
the LCID information comprises a bearer, wherein the bearer does not belong to a split bearer; or
the LCID information comprises a bearer, wherein the bearer does not belong to a split bearer of which a primary path is in the MCG.

35. The apparatus of claim 27, wherein in case that the target information comprises the target RRC signaling, the target RRC signaling comprises logical channel group ID, LCG ID, information, wherein the LCG ID information is ID information of a LCG having to-be-transmitted data in the SCG, and is indicated by a bitmap or by an LCG ID list.

36. The apparatus of claim 27, wherein in case that the target information comprises the target RRC signaling, the target RRC signaling comprises indication information of SCG having to-be-transmitted data.

37. The apparatus of claim 27, wherein in case that the target information comprises the target RRC signaling, the target RRC signaling comprises information of a size of to-be-transmitted data in the SCG,
wherein the size of the to-be-transmitted data in the SCG is in units of any one of per DRB, per LC, per LCG or per SCG.

38. An apparatus for transmitting for transmitting buffer data status information of a secondary cell group, SCG, comprising:
a receiving module, configured for receiving target information transmitted from a terminal through a master cell group, MCG, in case that the SCG is in a deactivated state, wherein the target information is used for indicating the buffer data status information of the SCG;
the target information comprises one or more of the following:
a target buffer status report, BSR; or
target radio resource control, RRC, signaling.

39. The apparatus of claim 38, further comprising:
a processing module, configured for:
performing, based on the target information, one or more of the following:
reconfiguring the target bearer for the MCG and/or the SCG;
activating the SCG,
wherein the target bearer is used for transmitting data corresponding to the buffer data status information of the SCG.

40. A processor-readable storage medium, storing a computer program that causes, when executed by a processor, the processor to perform the method of any one of claims 1 to 11 or
perform the method of any one of claims 12 to 13.
